# EUROPEAN PATENT APPLICATION

(11) **EP 3 951 683 A1**
(43) Date of publication of application: **09.02.2022**
(21) Application number: 20783605.7
(22) Date of filing: 26.02.2020
(51) Int. Cl.: G06Q 10/08, G06Q 50/06

(54) **INFORMATION PROCESSING DEVICE, INFORMATION PROCESSING METHOD, AND PROGRAM**

(30) Priority: 29.03.2019 JP 2019065426
(71) Applicant: Nippon Gas Co., Ltd., Tokyo 151-8582 (JP)
(72) Inventor: WADA, Shinji, Tokyo 151-8582 (JP)
(74) Representative: Betten & Resch
(86) International application number: PCT/JP2020/007674
(87) International publication number: WO 2020/202913

(57) **Abstract**

Conventionally, it is difficult to efficiently deliver gas cylinders to customers in the case of gas shortage or the like. With an information processing apparatus, it is possible to realize efficient delivery of gas cylinders to customers in the case of gas shortage or the like. The information processing apparatus includes: a customer information storage unit that stores one or more pieces of customer information that contain a customer identifier and customer position information; a delivery cylinder information storage unit that stores, in association with a delivery vehicle identifier, one or more pieces of delivery cylinder information; a delivery vehicle position information storage unit that stores delivery vehicle position information in association with a delivery vehicle identifier; a customer identifier acceptance unit that accepts a customer identifier; a customer information position information acquisition unit that acquires customer position information that is paired with the customer identifier, from the customer information storage unit; a delivery vehicle determination unit that determines a delivery vehicle that is to deliver a cylinder, using the customer position information, and a set of pieces of information composed of delivery vehicle position information and delivery cylinder information that is paired with the same delivery vehicle identifier; and a customer information transmission unit that transmits customer information that is paired with the customer identifier, to a delivery vehicle terminal of the delivery vehicle determined by the delivery vehicle determination unit.

## Description

### Technical field

The present invention relates to, for example, an information processing apparatus that performs processing to deliver a gas cylinder.

### Background Art

There is a conventional system for appropriately assigning delivery of LP gas cylinders to deliverers, the number of which is finite and variable (see Patent Document 1).

According to this system, the total number of deliveries at the delivery base is assigned to each deliverer according to the rank of the deliverer. Zip codes are managed as minimum area units, and pieces of delivery data sorted by zip code are assigned to the deliverers based on the number of deliveries thus assigned. In this way, this system can perform area management according to the delivery capabilities of the deliverers, by dynamically dividing the delivery area of the delivery base into sub areas constituted by one or more zip codes.

### Citation List

### Patent Document

Patent Document 1: JP 2013-254255A

### Summary of Invention

### Technical Problem

However, according to the conventional technology, it is difficult to efficiently deliver gas cylinders to customers in the case of gas shortage or the like. Note that gas cylinders are LPG cylinders, for example, but may be gas cylinders of another type.

### Solution to Problem

An information processing apparatus according to a first aspect of the present invention is an information processing apparatus including: a customer information storage unit that stores one or more pieces of customer information that contain a customer identifier and customer position information that specifies a position of a customer identified by the customer identifier; a delivery cylinder information storage unit that stores one or more pieces of delivery cylinder information that is information regarding a cylinder that is to be delivered by the delivery vehicle, in association with a delivery vehicle identifier that identifies a delivery vehicle; a delivery vehicle position information storage unit that stores, in association with a delivery vehicle identifier, delivery vehicle position information that specifies a position of the delivery vehicle; a customer identifier acceptance unit that accepts a customer identifier that identifies a customer whose remaining amount of gas is small enough to satisfy a predetermined condition; a customer information position information acquisition unit that acquires customer position information that is paired with the customer identifier accepted by the customer identifier acceptance unit, from the customer information storage unit; a delivery vehicle determination unit that determines a delivery vehicle that is to deliver a cylinder, using the customer position information acquired by the customer information position information acquisition unit and a set of pieces of information composed of delivery vehicle position information and delivery cylinder information, the set being paired with the same delivery vehicle identifier; and a customer information transmission unit that transmits customer information that is paired with a customer identifier, to a delivery vehicle terminal of the delivery vehicle determined by the delivery vehicle determination unit.

With such a configuration, it is possible to efficiently deliver gas cylinders to customers in the case of gas shortage or the like.

An information processing apparatus according to a second aspect of the present invention is the information processing apparatus according to the first aspect of the invention, wherein the delivery cylinder information contains cylinder type information that specifies a type of a cylinder, the customer information contains cylinder type information that specifies a type of a cylinder that is used by a customer, and the delivery vehicle determination unit determines a delivery vehicle that is to deliver a cylinder, using cylinder number information that specifies the number of cylinders acquired using delivery cylinder information that is paired with a delivery vehicle identifier, cylinder type information, cylinder type information contained in customer information, customer position information, and delivery vehicle position information that is paired with a delivery vehicle identifier.

With such a configuration, it is possible to more efficiently deliver gas cylinders to customers in the case of gas shortage or the like.

An information processing apparatus according to a third aspect of the present invention is the information processing apparatus according to the second aspect of the invention, wherein the delivery vehicle determination unit determines a delivery vehicle for which cylinder number information and cylinder type information acquired using the delivery cylinder information paired with the delivery vehicle identifier satisfy a cylinder condition that is a condition regarding cylinder number information and cylinder type information contained in the customer information, and that corresponds to delivery vehicle position information that satisfies a position condition regarding a distance between a position that is specified by the customer position information and a position that is specified by the delivery vehicle position information.

With such a configuration, it is possible to fairly efficiently deliver gas cylinders to customers in the case of gas shortage or the like.

An information processing apparatus according to a fourth aspect of the present invention is the information processing apparatus according to the third aspect of the invention, wherein the delivery vehicle determination unit determines a delivery vehicle that satisfies the cylinder condition and corresponds to delivery vehicle position information that satisfies a position condition that the distance between the position specified by the customer position information and the position specified by the delivery vehicle position information is the shortest.

With such a configuration, it is possible to fairly efficiently deliver gas cylinders to customers in the case of gas shortage or the like.

An information processing apparatus according to a fifth aspect of the present invention is the information processing apparatus according to any one of the first to fourth aspects of the invention, further including: a delivery list storage unit that stores a delivery list that is two or more pieces of delivery destination information regarding a delivery destination of a gas cylinder, in association with the delivery vehicle identifier; and a delivery list update unit that acquires a delivery list that corresponds to the delivery vehicle determined by the delivery vehicle determination unit, and acquires an updated delivery list by adding at least part of the customer information paired with the customer identifier, to the delivery list, and the customer information transmission unit transmits the delivery list updated by the delivery list update unit, to a delivery vehicle terminal of the delivery vehicle determined by the delivery vehicle determination unit.

With such a configuration, it is possible to transmit an updated delivery list to delivery vehicles.

An information processing apparatus according to a sixth aspect of the present invention is the information processing apparatus according to any one of the first to fifth aspects of the invention, further including: a delivery cylinder information reception unit that receives delivery cylinder information in association with a delivery vehicle identifier; a delivery cylinder information accumulation unit that accumulates the delivery cylinder information received by the delivery cylinder information reception unit, in the delivery cylinder information storage unit, in association with the delivery vehicle identifier; a delivery vehicle position information reception unit that receives delivery vehicle position information from a delivery vehicle terminal that is a terminal of a cylinder delivery vehicle, in association with a delivery vehicle identifier that identifies the delivery vehicle; and a delivery vehicle position information accumulation unit that accumulates the delivery vehicle position information received by the delivery vehicle position information reception unit, in the delivery vehicle position information storage unit, in association with the delivery vehicle identifier.

With such a configuration, it is possible to collect information regarding delivery vehicles and perform delivery control processing.

### Advantageous Effects of Invention

With the information processing apparatus according to the present invention, it is possible to efficiently deliver gas cylinders to customers in the case of gas shortage or the like.

### Brief Description of Drawings

FIG. 1 is a conceptual diagram for an information system A according to Embodiment 1.
FIG. 2 is a block diagram for the information system A according to the same.
FIG. 3 is a block diagram for an information processing apparatus A2 according to the same.
FIG. 4 is a flowchart illustrating examples of operations that are performed by a gas information transmission apparatus A1 according to the same.
FIG. 5 is a flowchart illustrating examples of operations that are performed by an information processing apparatus A2 according to the same.
FIG. 6 is a flowchart illustrating examples of operations that are performed by a next deliverer terminal A3 according to the same.
FIG. 7 is a flowchart illustrating examples of operations that are performed by a facility terminal A4 according to the same.
FIG. 8 is a conceptual diagram for the information system A according to the same.
FIG. 9 is a conceptual diagram for an information system C according to Embodiment 2.
FIG. 10 is a block diagram for the information system C according to the same.
FIG. 11 is a block diagram for an information processing system C2 that is included in the information system C according to the same.
FIG. 12 is a flowchart illustrating operations that are performed by the information processing apparatus C2 according to the same.
FIG. 13 is a flowchart illustrating a first example of delivery vehicle determination processing according to the same.
FIG. 14 is a flowchart illustrating a second example of delivery vehicle determination processing according to the same.
FIG. 15 is a flowchart illustrating a third example of delivery vehicle determination processing according to the same.
FIG. 16 is a flowchart illustrating an example of delivery list update processing according to the same.
FIG. 17 is a flowchart illustrating examples of operations that are performed by a deliverer terminal C3 according to the same.
FIG. 18 is a diagram showing a concept of processing through which the information processing apparatus C2 according to the same determines a delivery vehicle.
FIG. 19 is a diagram showing an example of an old delivery list according to the same.
FIG. 20 is a diagram showing an example of a new delivery list that has been updated according to the same.
FIG. 21 is an overview diagram for a computer system according to the above embodiments.
FIG. 22 is a block diagram for the computer system according to the same.

### Description of Embodiments

The following describes embodiments of information system and so on with reference to the drawings. Note that the components with the same reference numerals in the embodiments perform the same operations, and therefore redundant descriptions thereof may be omitted.

### Embodiment 1

The present embodiment describes an information system that includes one or more gas information transmission apparatuses that acquire and transmit gas information that includes information regarding the use of gas in one or more LPG cylinders, and information processing apparatus.

In addition, the present embodiment describes an information system that includes a gas information transmission apparatus that transmits two or more pieces of gas information all at once. Note that the gas information transmission apparatus acquires gas use information described later, once an hour, and transmits the gas use information for one day, to the information processing apparatus, once a day, for example. Note that the gas information transmission apparatus may acquires the gas use information described later once an hour, and separately transmits the gas use information for one day, to the information processing apparatus, twice a day or more, for example.

Furthermore, the present embodiment describes an information system that includes an information processing apparatus that also receives delivery cylinder information described later, delivery vehicle position information described later, climate information described later, and cylinder replacement information described later.

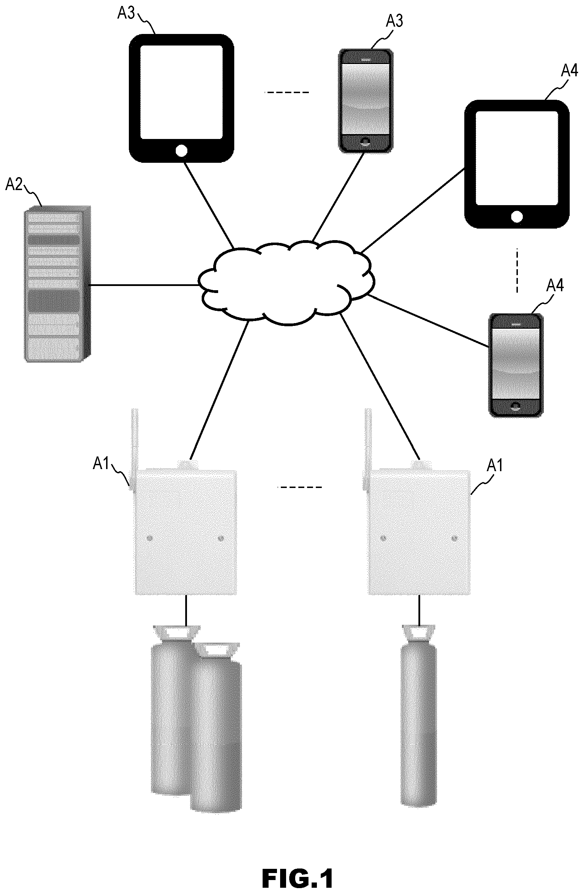

FIG. 1 is a conceptual diagram for an information system A according to the present embodiment. The information system A includes one or more gas information transmission apparatuses A1, an information processing apparatus A2, one or more deliverer terminals A3, and one or more facility terminals A4.

Gas information transmission apparatuses A1 are apparatuses that acquire gas information that includes gas use information, and transmit the gas information to the information processing apparatus A2. The gas information transmission apparatus A1 need only have a communication function, and the type thereof is not limited.

The information processing apparatus A2 is a server apparatus that receives and accumulates information such as gas information. "Information such as gas information" may be gas information alone, or one or more pieces of information of: delivery cylinder information described later; delivery vehicle position information described later; cylinder replacement information described later; and climate information may be used in addition to gas information. The information processing apparatus A2 can be realized using a so-called cloud server or an ASP server, but there is no limitation on the type thereof.

The deliverer terminals A3 are terminals that are used by deliverers. However, the deliverer terminals A3 may be terminals that are mounted on delivery vehicles. The deliverer terminals A3 are, for example, smartphones, tablet terminals, so-called personal computers, or the like, but there is no limitation on the type thereof. The deliverer terminals A3 have a communication function.

The facility terminals A4 are terminals that are present in the facility. The facility terminals A4 are, for example, smartphones, tablet terminals, so-called personal computers, or the like, but there is no limitation on the type thereof. The facility terminals A4 have a communication function. The facility is, for example, a factory or a depot station. A factory is a facility for filling gas cylinders with gas. A depot station is a facility where gas cylinders are placed.

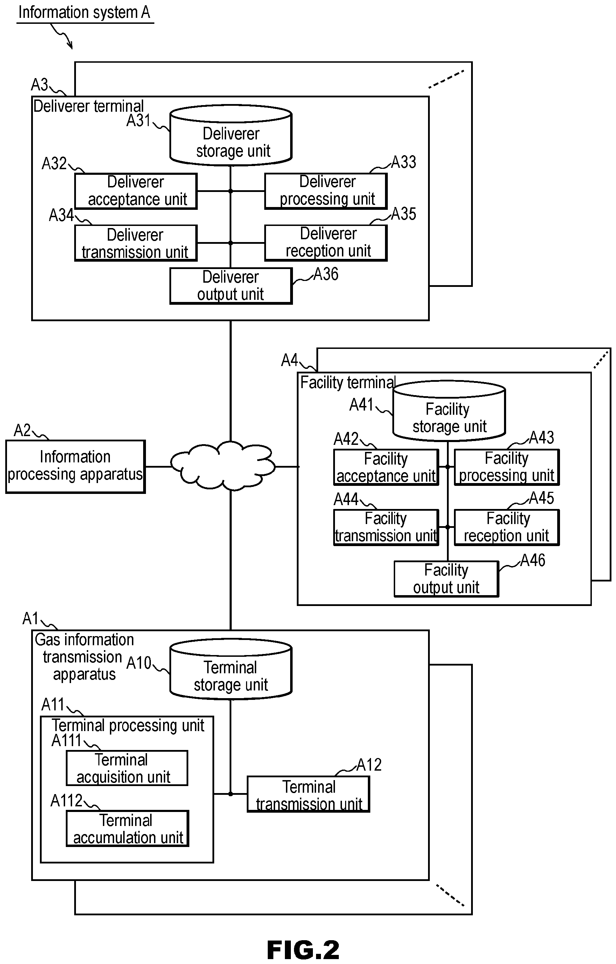

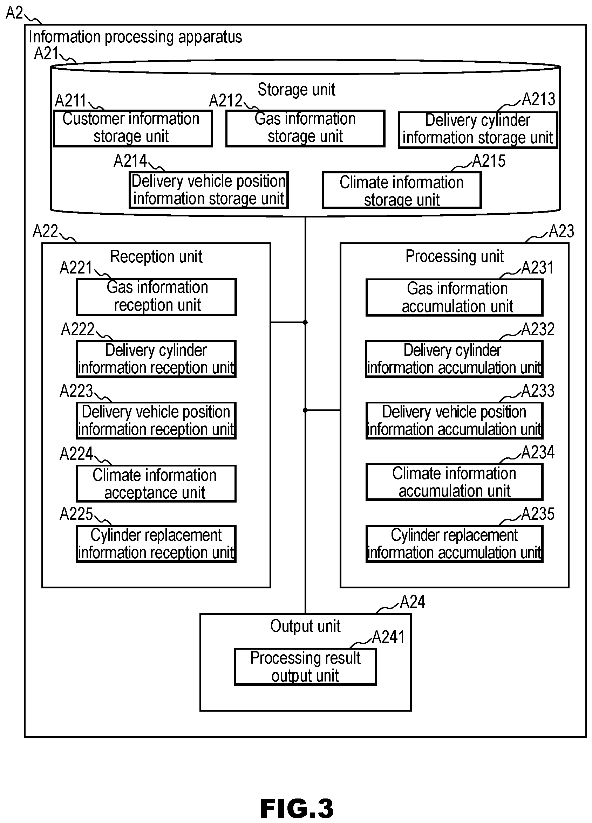

FIG. 2 is a block diagram for the information system A according to the present embodiment. FIG. 3 is a block diagram for the information processing apparatus A2 that is included in the information system A.

The gas information transmission apparatuses A1 includes a terminal storage unit A10, a terminal processing unit A11, and a terminal transmission unit A12. The terminal processing unit A11 includes a terminal acquisition unit A111 and a terminal accumulation unit A112.

The information processing apparatus A2 includes a storage unit A21, a reception unit A22, a processing unit A23, and an output unit A24. The storage unit A21 includes a customer information storage unit A211, a gas information storage unit A212, a delivery cylinder information storage unit A213, a delivery vehicle position information storage unit A214, and a climate information storage unit A215. The reception unit A22 includes a gas information reception unit A221, a delivery cylinder information reception unit A222, a delivery vehicle position information reception unit A223, a climate information acceptance unit A224, and a cylinder replacement information reception unit A225. The processing unit A23 includes a gas information accumulation unit A231, a delivery cylinder information accumulation unit A232, a delivery vehicle position information accumulation unit A233, a climate information accumulation unit A234, and a cylinder replacement information accumulation unit A235. The output unit A24 includes a processing result output unit A241.

Each deliverer terminal A3 includes a deliverer storage unit A31, a deliverer acceptance unit A32, a deliverer processing unit A33, a deliverer transmission unit A34, a deliverer reception unit A35, and a deliverer output unit A36.

Each facility terminal A4 includes a facility storage unit A41, a facility acceptance unit A42, a facility processing unit A43, a facility transmission unit A44, a facility reception unit A45, and a facility output unit A46.

The terminal storage unit A10 included in each gas information transmission apparatus A1 stores various kinds of information. Examples of the various kinds of information include gas information, a customer identifier that identifies a customer, a cylinder identifier that identifies a cylinder, and time information that specifies a time. Time information is, for example, date information that specifies a date, time point information that specifies a date and time, and time zone information that specifies a time zone. When time information is time point information, the time information may be regarded as including date information.

The terminal storage unit A10 stores pieces of gas information as of two or more points in time. Gas information is, for example, information associated with a cylinder identifier, a customer identifier that identifies a customer, and date information that indicates a date. Gas information is associated with time information, for example. Gas information contains, for example, gas use information. Gas use information is information regarding the gas used. Gas information contains, for example, one or more pieces of information of: unit time gas use information; and gas meter reading value information. Unit time gas use information is information that specifies the amount of gas used per unit time. Unit time gas use information is, for example, information that specifies the amount of gas used every one hour. Gas meter reading value information is, for example, information that specifies a gas meter reading value. Gas meter reading value information is, for example, information that specifies gas meter reading values acquired every one hour.

The gas information in the terminal storage unit A10 typically is information accumulated by the terminal accumulation unit A112.

The terminal processing unit A11 performs various kinds of processing. Examples of the various kinds of processing include processing that is performed by the terminal acquisition unit A111 and the terminal accumulation unit A112. Examples of the various kinds of processing include processing that is performed to delete gas information that has been transmitted, from the terminal storage unit A10.

The terminal acquisition unit A111 acquires gas information that is information that includes gas use information regarding the use of gas in an LPG cylinder and corresponds to a cylinder identifier that identifies an LPG cylinder. The terminal acquisition unit A111 acquires, for example, information from a gas meter. The terminal acquisition unit A111 acquires, for example, a meter reading value acquired from a gas meter, and calculates a gas use information that is the difference between the previous meter reading value and the current meter reading value and specifies the amount of gas used per unit time.

It is preferable that the terminal acquisition unit A111 acquires gas use information n times a day (n is 2 or more) every unit time. It is also preferable that the terminal acquisition unit A111 acquires gas use information every one hour.

It is preferable that the terminal acquisition unit A111 acquires time information from a clock (not shown) and associates the time information with the acquired gas use information. Note that the clock (not shown) may be present in the gas information transmission apparatuses A1 or may be a clock of an external apparatus such as an NTP server.

The terminal accumulation unit A112 accumulates the gas information acquired by the terminal acquisition unit A111, in the terminal storage unit A10. It is preferable that the terminal accumulation unit A112 accumulates the gas information acquired by the terminal acquisition unit A111, in the terminal storage unit A10 every unit time. Note that the unit time is, for example, on hour, thirty minutes, two hours, or the like. It is also preferable that the terminal accumulation unit A112 accumulates the gas information acquired by the terminal acquisition unit A111, in the terminal storage unit A10 in association with one or more pieces of information of: a customer identifier, a cylinder identifier, and time information.

The terminal transmission unit A12 transmits the gas information acquired by the terminal acquisition unit A111 to the information processing apparatus A2. The gas information acquired by the terminal acquisition unit A111 may be the gas information stored in the terminal storage unit A10.

The terminal transmission unit A12 transmits, for example, the gas information acquired by the terminal acquisition unit A111 to the information processing apparatus A2 in association with one or more identifiers. The one or more identifiers are, for example, one or more identifiers of: a cylinder identifier; and a cylinder identifier.

It is preferable that the terminal transmission unit A12 transmits gas information as of two or more time points stored in the terminal storage unit A10 to the information processing apparatus A2 when a predetermined condition is satisfied. The predetermined condition is, for example, that a predetermined time is reached, a predetermined number of pieces of gas information are stored in the terminal storage unit A10, or the like. In addition, transmitting gas information in association with a cylinder identifier or the like is, for example, transmitting gas information together with a cylinder identifier or the like, but there is no limitation on the method of associating pieces of information with each other. Note that the cylinder identifier is normally stored in the terminal storage unit A10. It is also preferable that, when the cylinder to be used is changed to another cylinder, the cylinder identifier of the other cylinder is automatically stored in the terminal storage unit A10.

Here, the transmission of gas information as of two or more time points may mean the transmission of two or more information sets that each consists of a piece of gas information and a piece of time information, or the transmission of two or more pieces of gas information arranged in chronological order.

In addition, the transmission of gas information for one day may mean the transmission of twenty-four information sets that each consists of gas information and time information, or the transmission of twenty-four pieces of gas information arranged in chronological.

Note that one piece of gas information is information that contains one piece of gas use information, but one piece of gas information may be information that contains a plurality of pieces of gas use information.

It is preferable that the terminal transmission unit A12 transmits two or more pieces of gas information in the terminal storage unit A10 to the information processing apparatus A2 less than n times a day.

It is preferable that the terminal transmission unit A12 transmits gas information to the information processing apparatus A2 once a day. Note that there is no limitation on the time at which the terminal transmission unit A12 transmits gas information.

The terminal transmission unit A12 may transmit gas information at different time points depending on a condition. That is, for example, the terminal transmission unit A12 may normally transmit a plurality of pieces of gas information to the information processing apparatus A2 at a low frequency (a first frequency), and when a predetermined condition is satisfied, the terminal transmission unit A12 may transmit gas information to the information processing apparatus A2 at a higher frequency (a second frequency) than the frequency in the normal case. The predetermined condition here is, for example, that the terminal processing unit A11 determines that the amount of gas that has been used is large enough to satisfy the predetermined condition (for example, an amount of gas no less than or greater than a threshold value has been used). Alternatively, the predetermined condition is, for example, that the terminal processing unit A11 determines that a small amount of gas has been used for a period that is long enough to satisfy the predetermined condition (for example, an amount of gas no greater than or less than a threshold value has been used for a period no less than a first threshold value).

It is also preferable that, after the terminal transmission unit A12 has transmitted gas information to the information processing apparatus A2, the terminal processing unit A11 deletes the transmitted gas information from the terminal storage unit A10.

The storage unit A21 included in the information processing apparatus A2 stores various kinds of information. Examples of the various kinds of information include customer information described later, gas information, delivery cylinder information described later, delivery vehicle position information described later, and climate information described later.

The customer information storage unit A211 stores one or more pieces of customer information each in association with a customer identifier. Customer information is information regarding a customer. Customer information contains, for example, a name, customer position information, and contact information. Customer position information is information that specifies the position of a customer. Customer position information is, for example, (latitude,longitude), address, or the like. Contact information is information that specifies a point of contact, and is, for example, an e-mail address or a telephone number. date information contains, for example, date information that specifies the date on which the gas cylinder was replaced. The customer information contains, for example, cylinder type information, cylinder number information, and gas remaining amount information. Cylinder type information is information that specifies the type of the cylinder used by the customer. The cylinder number information is information that specifies the number of cylinders installed in the customer's home. Gas remaining amount information is information that specifies the amount of gas remaining in the customer's gas cylinders. Customer information contains, for example, one or more medium identifiers that identify the medium used by the customer (for example, "LPG" and "electricity"), one or more appliance identifiers of energy appliances owned by the customer (for example, "gas appliance A", "electric appliance B", and "appliance C"), and one or more company identifiers that identify the energy companies with which the customer has a contract (for example, "company A"). Customer information may contain, for example, LPG cylinder information that contains cylinder capacity information regarding the capacity of the LPG cylinder used by the customer. Note that LPG cylinder information may be cylinder type information.

The gas information storage unit A212 stores one or more pieces of gas information. The gas information storage unit A212 normally stores two or more pieces of gas information associated with customer identifiers. It is preferable that the pieces of gas information are associated with one or more pieces of information of: time information that specifies a time; and a cylinder identifier. In addition, here, the association with time information and cylinder identifier may be realized by storing gas information so that time information and a cylinder identifier can be known.

The delivery cylinder information storage unit A213 stores one or more pieces of delivery cylinder information. Delivery cylinder information is information regarding a cylinder that is to be delivered. Delivery cylinder information contains, for example, cylinder type information and cylinder state information. Delivery cylinder information typically is information from which the number of cylinders can be known. That is to say, delivery cylinder information may contain number information that specifies the number of cylinders, or the number of pieces of delivery cylinder information that have been received may indicate the number of cylinders. Cylinder type information is information that specifies the type of the cylinder, and indicates, for example, 20 Kg, 30 Kg, or 50 Kg. Cylinder state information is information that indicates whether or not the cylinder is full. Delivery cylinder information corresponds to, for example, one or more pieces of information of: a cylinder identifier; a delivery vehicle identifier; a deliverer identifier; and time information that specifies entry/exit date and time. Note that the entry/exit date and time is an entry date and time or an exit date and time to/from a factory where the cylinder is to be filled with gas, or entry date and time or an exit date and time to/from a depot station where cylinders are stored. Alternatively, time point information may be information that only specifies a date.

The delivery vehicle position information storage unit A214 stores one or more pieces of delivery vehicle position information. Delivery vehicle position information is information that specifies the position of a delivery vehicle. Delivery vehicle position information is, for example, (latitude,longitude), but may be, for example, a facility identifier that identifies the nearest facility. The facility is, for example, a factory or a depot station. Delivery vehicle position information is associated with, for example, a delivery vehicle identifier that identifies the delivery vehicle for the cylinder, or a deliverer identifier.

The climate information storage unit A215 stores one or more pieces of climate information. Climate information is information regarding weather. Climate information is, for example, one or more pieces of information of: weather; temperature; humidity; and so on. It is preferable that climate information is associated with time information. Time information is, for example, date information and time point information.

The reception unit A22 receives various kinds of information. Examples of the various kinds of information include gas information, delivery cylinder information, delivery vehicle position information, climate information, and cylinder replacement information.

The gas information reception unit A221 receives one or more pieces of gas information from the gas information transmission apparatuses A1. The gas information reception unit A221 receives, for example, gas information associated with one or more identifiers of: a customer identifier; and a cylinder identifier, from the gas information transmission apparatuses A1.

The delivery cylinder information reception unit A222 receives one or more pieces of delivery cylinder information. The delivery cylinder information reception unit A222 receives delivery cylinder information in association with one or more pieces of information of: a cylinder identifier; a delivery vehicle identifier; and a deliverer identifier, for example. The delivery cylinder information reception unit A222 receives delivery cylinder information in association with a loading platform identifier, for example. The loading platform identifier is information that specifies a loading platform loading platform on which the cylinder is placed. The delivery cylinder information reception unit A222 receives delivery cylinder information in association with time point information that identifies entry/exit date and time, for example. The entry/exit date and time is the date and time of entry/exit to/from a facility. The delivery cylinder information reception unit A222 receive delivery cylinder information from the facility terminals A4, for example. The delivery cylinder information reception unit A222 receive delivery cylinder information from the deliverer terminals A3, for example. Note that there is no limitation on the source of delivery cylinder information. The cylinder identifier is, for example, information stored in a communication means (for example, an RFID tag) installed in a cylinder that is to be delivered, and indirectly or directly received from such a communication means. The cylinder identifier may be, for example, information input to a facility terminal A4 by a user and transmitted from the facility terminal A4. The delivery vehicle identifier is, for example, information stored in a communication means (for example, an RFID tag) installed in a delivery vehicle itself (for example, a trailer head), and indirectly or directly received from such a communication means. Note that, in such a case, the delivery vehicle identifier may be referred to as a trailer head identifier. In addition, the delivery vehicle identifier and the trailer head identifier may be different pieces of information, and in such a case, the delivery cylinder information reception unit A222 may receive delivery cylinder information in association with the trailer head identifier. In addition, the deliverer identifier is, for example, information indirectly or directly received from a deliverer terminal A3 held by a deliverer. The deliverer identifier may be, for example, information stored in a communication means installed in a delivery vehicle itself (for example, a trailer head), and indirectly or directly received from such a communication means. Furthermore, the loading platform identifier is, for example, information stored in a communication means (for example, an RFID tag) installed in a loading platform of a delivery vehicle, and indirectly or directly received from such a communication means.

The delivery vehicle position information reception unit A223 receives one or more pieces of delivery vehicle position information. The delivery vehicle position information reception unit A223 normally receives delivery vehicle position information from the deliverer terminals A3 that are terminals on delivery vehicles, but there is no limitation on the source of delivery vehicle position information. Note that the deliverer terminals A3 may be terminals that are different from the terminals held by deliverers, and may be terminals mounted on delivery vehicles.

The delivery vehicle position information reception unit A223 normally receives delivery vehicle position information in association with a delivery vehicle identifier that identifies a delivery vehicle. However, the delivery vehicle position information reception unit A223 may receive delivery vehicle position information in association with a deliverer identifier. Also, delivery vehicle identifier and deliverer identifier may be the same information.

The climate information acceptance unit A224 receives one or more pieces of climate information. Here, "acceptance" means, for example, reception from a server apparatus (not shown), but may be regarded as a concept that includes acceptance of information input from an input device such as a keyboard, a mouse, or a touch panel, or acceptance of information read from a recording medium such as an optical disk, a magnetic disk, or a semiconductor memory. Note that the server apparatus (not shown) is an apparatus that stores climate information.

The cylinder replacement information reception unit A225 receives one or more pieces of cylinder replacement information. Cylinder replacement information is information that indicates that a cylinder has been replaced. The cylinder replacement information reception unit A225 receives cylinder replacement information that is paired with one or more pieces of information of: a customer identifier; and a cylinder identifier, for example. The cylinder replacement information reception unit A225 receives, for example, cylinder replacement information from a deliverer terminal A. Note that there is no limitation on the transmission source of cylinder replacement information.

The processing unit A23 performs predetermined processing, using two or more pieces of gas information stored in the gas information storage unit A212. Examples of the predetermined processing include delivery date prediction processing described later, delivery control processing described later, futures trading processing described later, residence stay processing described later, energy optimum plan presentation processing described later, household credit rating acquisition processing described later, statistical processing, and so on. statistical processing is statistical processing to be performed on a plurality of pieces of gas information. Examples of statistical processing includes processing that is performed to calculate the average amount of gas used by a household for a certain period from a plurality of pieces of gas information, processing that is performed to calculate the cumulative value of the amount of gas used for a certain period, and processing that is performed to acquire a graph showing changes in the amount of gas used. Note that delivery date prediction processing, delivery control processing, futures trading processing, residence stay processing, energy optimum plan presentation processing, and household credit rating acquisition processing will be described in Embodiment 2 and the subsequent embodiments. Note that delivery date prediction processing is processing that is performed to predict the delivery date on which a gas cylinder is to be delivered to household. Delivery control processing is processing that is performed to deliver a gas cylinder to a household that has run out of gas, for example. Futures trading processing is processing that is performed to determine the price of gas and supporting futures trading. Residence stay processing is processing that is performed to output information regarding whether or not an inhabitant is present in a residence. Energy optimum plan presentation processing is processing that is performed to present an appropriate energy plan. Household credit rating acquisition processing is processing that is performed to acquire and output a credit rating of a household.

The processing unit A23 performs predetermined processing, also using one or more pieces of delivery cylinder information stored in the delivery cylinder information storage unit A213, for example. The predetermined processing is, for example, delivery control processing.

The processing unit A23 performs the predetermined processing, using one or more pieces of delivery vehicle position information stored in the delivery vehicle position information storage unit A214, for example. The predetermined processing is, for example, delivery control processing.

The processing unit A23 performs the predetermined processing, using one or more pieces of climate information stored in the climate information storage unit A215. Examples of the predetermined processing include delivery date prediction processing, futures trading processing, and energy optimum plan presentation processing.

The gas information accumulation unit A231 accumulates the one or more pieces of gas information received by the gas information reception unit A221, in the gas information storage unit A212. The gas information accumulation unit A231 accumulates each piece of gas information received by the gas information reception unit A221, in the gas information storage unit A212, in association with one or more pieces of information of: time information; a customer identifier; and a cylinder identifier. Note that such time information may be information received from the gas information transmission apparatuses A1, or information acquired from a clock (not shown).

The delivery cylinder information accumulation unit A232 accumulates the one or more pieces of delivery cylinder information received by the delivery cylinder information reception unit A222, in the delivery cylinder information storage unit A213. The delivery cylinder information accumulation unit A232 accumulates each piece of delivery cylinder information in the delivery cylinder information storage unit A213 in association with one or more pieces of information of: a cylinder identifier; a delivery vehicle identifier; and a deliverer identifier, for example.

The delivery vehicle position information accumulation unit A233 accumulates the one or more pieces of delivery vehicle position information received by the delivery vehicle position information reception unit A223, in the delivery vehicle position information storage unit A214. The delivery vehicle position information accumulation unit A233 accumulates each piece of delivery vehicle position information in the delivery vehicle position information storage unit A214 in association with a delivery vehicle identifier or a deliverer identifier.

The climate information accumulation unit A234 accumulates one or more pieces of climate information, in the climate information storage unit A215. The climate information accumulation unit A234 normally each piece of climate information in the climate information storage unit A215 in association with time information. Note that time information may be information received by the reception unit A22 or may be acquired from a clock (not shown). In addition, time information may be date information or time point information.

When the cylinder replacement information reception unit A225 receives cylinder replacement information, the cylinder replacement information accumulation unit A235 updates the gas remaining amount information contained in the gas information paired with one or more pieces of information of: a customer identifier; and a cylinder identifier, to information that specifies that the amount of gas remaining is full.

The deliverer storage unit A31 included in each deliverer terminal A3 stores various kinds of information. Examples of the various kinds of information include a deliverer identifier that identifies a deliverer. Examples of the various kinds of information include a delivery vehicle identifier that identifies a delivery vehicle. The deliverer identifier and the delivery vehicle identifier may be the same information. Examples of the various kinds of information include cylinder replacement information. Cylinder replacement information is information that indicates that a cylinder has been replaced. Cylinder replacement information is associated with one or more identifiers of: a customer identifier; and a cylinder identifier.

The deliverer acceptance unit A32 accepts various instructions and various kinds of information. Examples of the various instructions and various kinds of information include cylinder replacement information. Examples of the various instructions and various kinds of information include cylinder replacement information and one or more identifiers of: a customer identifier; and a cylinder identifier. When a cylinder of a certain household is to be replaced or has been replaced, the deliverer inputs cylinder exchange information to the deliverer terminal A3. In addition, cylinder replacement information may be input by pressing a button, or may be input by inputting information in a field, for example.

It is preferable that the deliverer inputs one or more identifiers of: a customer identifier; and a cylinder identifier together with cylinder replacement information. In such a case, the deliverer acceptance unit A32 accepts cylinder replacement information, and one or more identifiers of: a customer identifier; and a cylinder identifier.

Any input means may be employed to input cylinder replacement information, such as a touch panel, a keyboard, a mouse, a menu screen, or the like. The deliverer acceptance unit A32 can be realized using a device driver for the input means such as a touch panel or a keyboard, or control software or the like for controlling the menu screen.

The deliverer processing unit A33 performs various kinds of processing. Examples of the various kinds of information include processing that is performed to convert the information accepted by the deliverer acceptance unit A32 so as to have a data structure of information to be transmitted. Examples of the various kinds of processing include processing that is performed when the deliverer acceptance unit A32 accepts cylinder replacement information, to form information in which the cylinder replacement information, the deliverer identifier in the deliverer storage unit A31, and one or more identifiers of: the customer identifier; and the cylinder identifier, which have been input, are associated with each other. Examples of the various kinds of information include processing that is performed to convert the information received by the deliverer reception unit A35 so as to have a data structure of information that is to be output.

The deliverer transmission unit A34 transmits cylinder replacement information to the information processing apparatus A2. The deliverer transmission unit A34 normally transmits cylinder replacement information that is associated with one or more identifiers of: a customer identifier; and a cylinder identifier, to the information processing apparatus A2. It is preferable that the deliverer transmission unit A34 transmits a deliverer identifier as well as cylinder replacement information.

The deliverer reception unit A35 receives various kinds of information. The deliverer reception unit A35 receives various kinds of information from the information processing apparatus A2, for example. The deliverer reception unit A35 receives customer information described later, from the information processing apparatus A2, for example. Note that customer information is information regarding a customer, and is information paired with a customer identifier. The customer information received by the deliverer reception unit A35 is information regarding the customer to which a gas cylinder is to be delivered, for example. Note that the customer identifier may be contained in customer information.

The deliverer output unit A36 outputs various kinds of information. Examples of the various kinds of information include information formed by the deliverer processing unit A33. Examples of the various kinds of information include customer information. Customer information is information regarding the customer to which a gas cylinder is to be delivered. It is preferable that customer information contains one or more pieces of information of: a customer identifier; customer position information; and information regarding the gas cylinder to be delivered. Customer position information is information that specifies the position of a customer. Customer position information is, for example, (latitude,longitude), address, or the like. Information regarding the gas cylinder to be delivered is, for example, cylinder type information that specifies the type of a gas cylinder, the number of gas cylinders, and so on.

Here, "output" typically means displaying on a display device, but may be regarded as a concept that includes projection with a projector, printing with a printer, sound output, transmission to an external apparatus, accumulation on a recording medium, delivery of processing results to another processing apparatus or another program, and so on.

The facility storage unit A41 included in each facility terminal A4 stores various kinds of information. Examples of the various kinds of information include a facility identifier that identifies a facility. It is preferable that the facility storage unit A41 stores delivery cylinder information that is information received by a terminal in a delivery vehicle, (for example, an RFID) and is information regarding a cylinder mounted on the delivery vehicle. Delivery cylinder information is associated with a cylinder identifier. It is preferable that delivery cylinder information is associated with a loading platform identifier and entry/exit date and time, for example. Delivery cylinder information contains, for example, cylinder type information and cylinder state information. It is preferable that delivery cylinder information contains information that specifies the number of cylinders to be delivered.

The facility acceptance unit A42 accepts various instructions and various kinds of information.

The facility processing unit A43 performs various kinds of processing. Examples of the various kinds of processing include processing that is performed to accumulate information received by the facility reception unit A45. The facility processing unit A43 at least temporarily accumulates the delivery cylinder information and identifiers received by the facility reception unit A45, in the facility storage unit A41. Note that examples of the identifiers include one or more identifiers of: a cylinder identifier; a loading platform identifier; a delivery vehicle identifier; and a deliverer identifier.

The facility transmission unit A44 transmits various kinds of information. The facility transmission unit A44 transmits, for example, various kinds of information to the information processing apparatus A2. The facility transmission unit A44 transmits delivery cylinder information in association with identifiers, for example. Examples of the identifiers include one or more identifiers of: a cylinder identifier; a loading platform identifier; a delivery vehicle identifier; and a deliverer identifier.

The facility reception unit A45 receives various kinds of information. The facility reception unit A45 receives, for example, various kinds of information from a terminal of a delivery vehicle (for example, an RFID). The facility reception unit A45 receives delivery cylinder information in association with identifiers, for example. Examples of the identifiers include one or more identifiers of: a cylinder identifier; a loading platform identifier; a delivery vehicle identifier; and a deliverer identifier.

The facility output unit A46 outputs various kinds of information.

It is preferable that the terminal storage unit A10, the storage unit A21, the customer information storage unit A211, the gas information storage unit A212, the delivery cylinder information storage unit A213, the delivery vehicle position information storage unit A214, the climate information storage unit A215, the deliverer storage unit A31, and the facility storage unit A41 are realized using a non-volatile recording medium, but they can be realized using a volatile recording medium.

There is no limitation on the process in which information is stored in the terminal storage unit A10 and so on. For example, information may be stored in the terminal storage unit A10 or the like via a recording medium, or information transmitted via a communication line or the like may be stored in the terminal storage unit A10 or the like, or information input via an input device may be stored in the terminal storage unit A10 or the like.

The terminal processing unit A11, the terminal acquisition unit A111, the terminal accumulation unit A112, the processing unit A23, the gas information accumulation unit A231, the delivery cylinder information accumulation unit A232, the delivery vehicle position information accumulation unit A233, the climate information accumulation unit A234, the cylinder replacement information accumulation unit A235, the deliverer processing unit A33, and the facility processing unit A43 can typically be realized using an MPU, a memory, or the like. The processing procedures performed by the terminal processing unit A11 and so on typically are realized using software, and the software is recorded on a recording medium such as a ROM. However, such processing procedures may be realized using hardware (a dedicated circuit). Needless to say, a CPU or a GPU may be used instead of the MPU.

The terminal transmission unit A12, the output unit A24, processing result output unit A241, the deliverer transmission unit A34, and the facility transmission unit A44 typically are realized using a wireless or wired communication means, but may be realized using a broadcast means.

The reception unit A22, the gas information reception unit A221, the delivery cylinder information reception unit A222, the delivery vehicle position information reception unit A223, the climate information acceptance unit A224, the cylinder replacement information reception unit A225, the deliverer reception unit A35, and the facility reception unit A45 typically are realized using a wireless or wired communication means, but may be realized using a means for receiving broadcast.

The deliverer acceptance unit A32 and the facility acceptance unit A42 can be realized using a touch panel, a keyboard, a mouse, a menu screen, or the like.

The deliverer output unit A36 and the facility output unit A46 may be regarded as including or not including an output device such as a display or a speaker. The deliverer output unit A36 and so on can be realized using the driver software of the output device, the driver software of the output device and the output device, or the like.

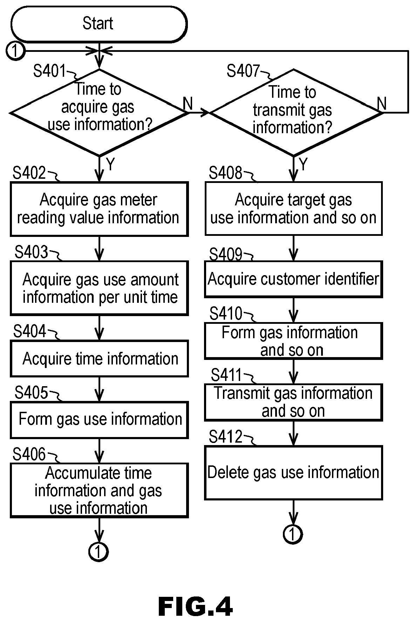

Next, operations that are performed by the information system A will be described. First, examples of operations that are performed by the gas information transmission apparatus A1 will be described with reference to the flowchart shown in FIG. 4.

(Step S401) The terminal processing unit A11 determines whether or not it is the time to acquire gas use information. If it is the time to acquire gas use information, processing proceeds to step S402, and if it is not the time to acquire gas use information, processing proceeds to step S407. For example, when acquiring gas use information every one hour, the terminal processing unit A11 acquires time information from a clock (not shown), and if the time indicated by the time information matches "X hour 00 minutes" (X is a natural number in the range of 1 to 24), the terminal processing unit A11 determines that it is the time to acquire gas use information.

(Step S402) The terminal acquisition unit A111 acquires gas meter reading value information from a gas meter (not shown). Noted that such a technique is a well-known technique. Note that the gas meter typically is an LP gas meter, and is a device that holds the gas meter reading value that indicates the flow rate integration measured from the installation of the device.

(Step S403) The terminal acquisition unit A111 calculates information indicating gas use amount per unit time, which is the difference between the previously acquired gas meter reading value information and the gas meter reading value information currently acquired in step S402. Note that the terminal acquisition unit A111 acquires the information indicating the gas use amount per unit time by calculating, for example, "information indicating the gas use amount per unit time = the previously acquired gas meter reading value information - the gas meter reading value information acquired in step S402".

(Step S404) The terminal acquisition unit A111 acquires time information that indicates the current time from a clock (not shown).

(Step S405) The terminal acquisition unit A111 forms gas use information to be accumulated, using the information indicating the gas use amount per unit time, acquired in step S403.

(Step S406) The terminal accumulation unit A112 accumulates the time information acquired in step S404 and the gas use information formed in step S405 in association with each other. Processing returns to step S401. Note that the location where the gas use information or the like is to be accumulated typically is the terminal storage unit A10. Note that the terminal accumulation unit A112 may accumulate gas use information in association with a cylinder identifier. In such a case, the terminal acquisition unit A111 acquires the cylinder identifier as well.

(Step S407) The terminal processing unit A11 determines whether or not it is the time to transmit gas information. If it is the time to transmit gas information, processing proceeds to step S408, and if it is not the time to transmit gas information, processing returns to step S401. For example, when transmitting gas information once a day, the terminal processing unit A11 acquires time information from a clock (not shown), and upon determining that the time indicated by the time information has passed a predetermined time (for example, "24:01"), the terminal processing unit A11 determines that it is the time to transmit gas information. Note that even if it is determined that the predetermined time has passed, the gas information that has already been transmitted is usually not transmitted again. Also, even if the terminal processing unit A11 determines that the predetermined time has passed, the terminal processing unit A11 usually does not determine that it is the time to transmit gas information until a predetermined period (for example, one day) elapses.

(Step S408) The terminal processing unit A11 acquires gas use information and so on to be transmitted, from the terminal storage unit A10. The gas use information and so on are, for example, a set of pieces of information composed of gas use information and time information, gas use information alone, gas use information and a cylinder identifier, or a set of pieces of information composed of gas use information, a cylinder identifier, and time information.

(Step S409) The terminal processing unit A11 acquires a customer identifier from the terminal storage unit A10.

(Step S410) The terminal processing unit A11 forms gas information and so on to be transmitted. Gas information contains, for example, a plurality of pieces of gas use information and so on and one or more identifiers. The one or more identifiers are, for example, one or more pieces of information of: a customer identifier; and a cylinder identifier.

(Step S411) The terminal transmission unit A12 transmits the gas information and so on formed in step S410 to the information processing apparatus A2.

(Step S412) The terminal processing unit A11 deletes the transmitted gas use information and so on. Here, a flag indicating that the information has been transmitted may be accumulated in association with the transmitted gas use information and so on. Such addition of a flag may be regarded as the same as the deletion. Processing returns to step S401.

In the flowchart shown in FIG. 4, the number of times gas use information is accumulated is larger than the number of times gas information is transmitted. That is to say, in the flowchart shown in FIG. 4, a plurality of pieces of gas use information are transmitted to the information processing apparatus A2 all at once. As a result, the power consumption of the gas information transmission apparatus A1 can be reduced, and the frequency of battery replacement of the gas information transmission apparatus A1 can be reduced. However, in the flowchart shown in FIG. 4, gas information may be transmitted each time gas use information is acquired.

Also, in the flowchart shown in FIG. 4, the terminal transmission unit A12 may transmit gas information to the information processing apparatus A2 at different frequencies in a case where a predetermined condition is satisfied and in a case where the predetermined condition is not satisfied. Here, the predetermined condition is, for example, that the terminal processing unit A11 determines that the amount of gas that has been used is large enough to satisfy the predetermined condition.

In the flowchart shown in FIG. 4, processing is terminated when power is turned off or an interruption is made to terminate the processing.

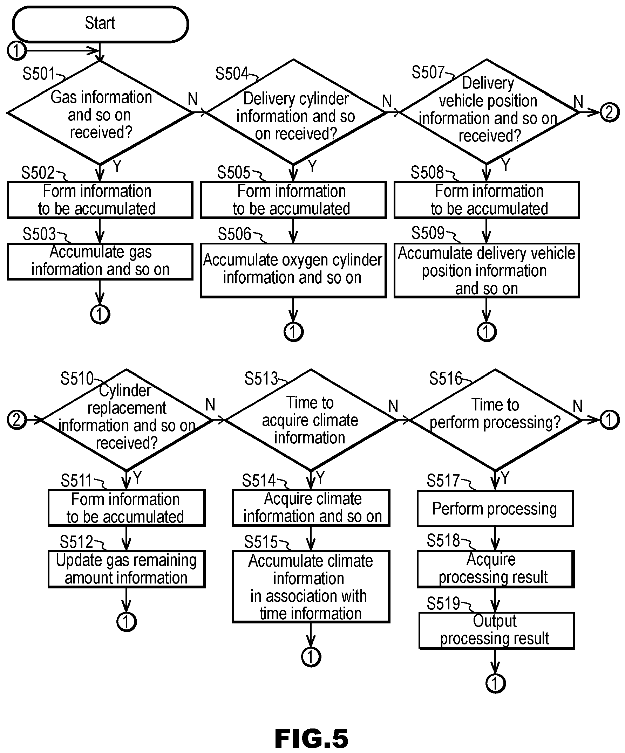

Next, examples of operations that are performed by the information processing apparatus A2 will be described with reference to the flowchart shown in FIG. 5.

(Step S501) The gas information reception unit A221 determines whether or not gas information and so on transmitted from the gas information transmission apparatuses A1 have been received. If gas information and so on have been received, processing proceeds to step S502, and if gas information and so on have not been received, processing proceeds to step S504. Gas information and so on are, for example, gas information and one or more identifiers. The one or more identifiers are, for example, one or more pieces of information of: a customer identifier; and a cylinder identifier.

(Step S502) The gas information accumulation unit A231 forms gas information and so on to be accumulated, using the gas information and so on received in step S501.

(Step S503) The gas information accumulation unit A231 accumulates the gas information and so on formed in step S502 in the gas information storage unit A212. Processing returns to step S501.

(Step S504) The delivery cylinder information reception unit A222 determines whether or not delivery cylinder information and so on have been received. If delivery cylinder information and so on have been received, processing proceeds to step S505, and if delivery cylinder information and so on have not been received, processing proceeds to step S507. Delivery cylinder information and so on are, for example, delivery cylinder information and one or more identifiers. The one or more identifiers are, for example, one or more pieces of information of: a cylinder identifier; a deliverer identifier; and a delivery vehicle identifier.

(Step S505) The delivery cylinder information accumulation unit A232 forms delivery cylinder information and so on to be accumulated, using the delivery cylinder information and so on received in step S504.

(Step S506) The delivery cylinder information accumulation unit A232 accumulates the delivery cylinder information and so on formed in step S505, in the delivery cylinder information storage unit A213. Processing returns to step S501.

(Step S507) The delivery vehicle position information reception unit A223 determines whether or not delivery vehicle position information and so on have been received. If delivery vehicle position information and so on have been received, processing proceeds to step S508, and if delivery vehicle position information and so on have not been received, processing proceeds to step S510. Delivery vehicle position information and so on are, for example, delivery vehicle position information and one or more identifiers. The one or more identifiers are, for example, one or more pieces of information of: a deliverer identifier; and a delivery vehicle identifier.

(Step S508) The delivery vehicle position information accumulation unit A233 forms delivery vehicle position information and so on to be accumulated, using the delivery vehicle position information and so on received in step S507.

(Step S509) The delivery vehicle position information accumulation unit A233 accumulates the delivery vehicle position information and so on formed in step S508, in the delivery vehicle position information storage unit A214. Processing returns to step S501.

(Step S510) Cylinder replacement information reception unit A225 determines whether or not cylinder replacement information and so on have been received. If cylinder replacement information and so on have been received, processing proceeds to step S511, and if cylinder replacement information and so on have not been received, processing proceeds to step S513. Cylinder replacement information and so on are, for example, cylinder replacement information and one or more identifiers. The one or more identifiers are, for example, one or more pieces of information of: a customer identifier; and a cylinder identifier.

(Step S511) The cylinder replacement information accumulation unit A235 forms cylinder replacement information and so on to be accumulated, using the cylinder replacement information and so on received in step S510.

(Step S512) The cylinder replacement information accumulation unit A235 updates the gas remaining amount information regarding the customer information storage unit A211, using the cylinder replacement information and so on formed in step S511. Processing returns to step S501.

(Step S513) The processing unit A23 determines whether or not it is the time to acquire climate information. If it is the time to acquire climate information, processing proceeds to step S514, and if it is not the time to acquire climate information, processing proceeds to step S516. Note that the time to acquire climate information is, for example, every one hour, every one day, or the like.

(Step S514) The climate information acceptance unit A224 acquires climate information and so on from a server (not shown). Here, the climate information acceptance unit A224 may acquire climate information and so on regarding two or more regions, for example.

(Step S515) The climate information accumulation unit A234 accumulates the climate information and so on acquired in step S514 in association with time information, in the climate information storage unit A215. Processing returns to step S501. Climate information and so on are, for example, climate information and time information. The climate information accumulation unit A234 may accumulate climate information and so on in association with time information and a region identifier that identifies a region, in the climate information storage unit A215.

(Step S516) The processing unit A23 determines whether or not it is the time to perform processing, using gas information. If it is the time to perform processing, processing proceeds to step S517, and if it is not the time to perform processing, processing returns to step S501.

(Step S517) The processing unit A23 preforms predetermined processing. Examples of predetermined processing include delivery date prediction processing, delivery control processing, futures trading processing, residence stay processing, energy optimum plan presentation processing, household credit rating acquisition processing, and statistical processing.

(Step S518) The processing unit A23 acquires a processing result that is information that specifies the result of processing performed in step S517.

(Step S519) The processing result output unit A241 outputs the processing result acquired in step S518. Processing returns to step S501.

In the flowchart shown in FIG. 5, processing is terminated when power is turned off or an interruption is made to terminate the processing.

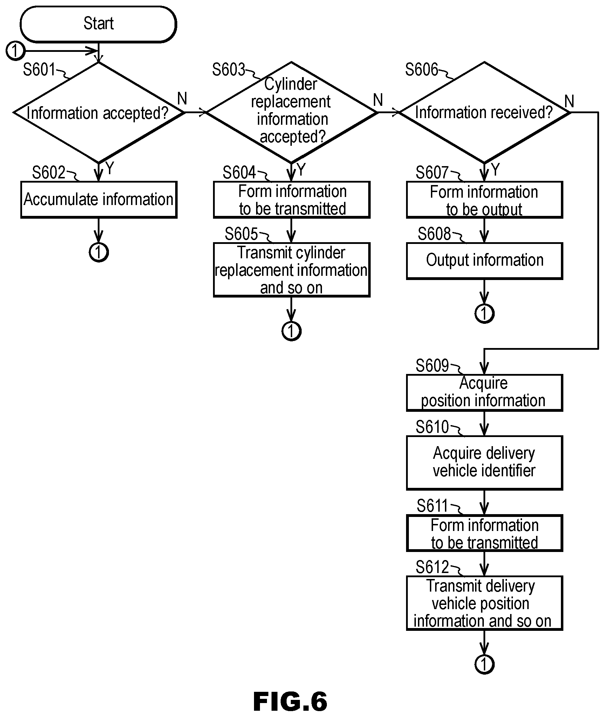

Next, examples of operations that are performed by each deliverer terminal A3 will be described with reference to the flowchart shown in FIG. 6.

(Step S601) The deliverer acceptance unit A32 determines whether or not information has been accepted. If information has been accepted, processing proceeds to step S602, and if information has not been accepted, processing proceeds to step S603. Examples of information include a customer identifier and a cylinder identifier.

(Step S602) The deliverer processing unit A33 at least temporarily accumulate the information accepted in step S601, in the deliverer storage unit A31. Processing returns to step S601.

(Step S603) The deliverer acceptance unit A32 determines whether or not cylinder replacement information has been accepted. If cylinder replacement information has been accepted, processing proceeds to step S604, and if cylinder replacement information has not been accepted, processing proceeds to step S606.

(Step S604) The deliverer processing unit A33 forms cylinder replacement information and so on to be transmitted. Cylinder replacement information and so on contain, for example, a customer identifier and a cylinder identifier.

(Step S605) The deliverer transmission unit A34 transmits the cylinder replacement information and so on formed in step S604 to the information processing apparatus A2. Processing returns to step S601.

(Step S606) The deliverer reception unit A35 determines whether or not information has been received. If information has been received, processing proceeds to step S607, and if information has not been received, processing proceeds to step S609. Note that examples of information include customer information and a delivery list. The delivery list is information regarding a list of customers to which the deliverer delivers gas cylinders.

(Step S607) The deliverer processing unit A33 forms information that is to be output, using the information received in step S606. Examples of information that is to be output include customer information, a delivery list, a map that explicitly shows the position specified by the customer position information contained in the customer information, and route information that is the result of a search for a route from the position specified by delivery vehicle position information to the position specified by the customer position information. Note that the deliverer processing unit A33 may have the function of acquiring delivery vehicle position information (for example, the function of a GPS receiver) and a route search function.

(Step S608) The deliverer output unit A36 outputs the information formed in step S607. Processing returns to step S601.

(Step S609) The deliverer processing unit A33 acquires position information regarding the delivery vehicle. Note that when the deliverer processing unit A33 acquires position information, the deliverer processing unit A33 typically has a GPS receiver, but may use another means to acquire position information. The other means uses, for example, the strength of radio waves transmitted from three or more radio base stations, to perform processing, for example.

(Step S610) The deliverer processing unit A33 acquires a delivery vehicle identifier from the deliverer storage unit A31.

(Step S611) The deliverer processing unit A33 forms delivery vehicle position information and so on to be transmitted, using the delivery vehicle position information acquired in step S609 and the delivery vehicle identifier acquired in step S610.

(Step S612) The deliverer transmission unit A34 transmits the delivery vehicle position information and so on formed in step S611 to the information processing apparatus A2. Processing returns to step S601.

Note that there is no limitation on the time at which the delivery vehicle position information is transmitted in the flowchart shown in FIG. 6.

In the flowchart shown in FIG. 6, processing is terminated when power is turned off or an interruption is made to terminate the processing.

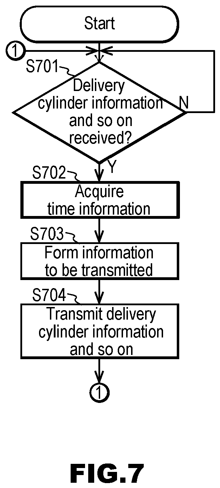

Next, examples of operations that are performed by each facility terminal A4 will be described with reference to the flowchart shown in FIG. 7.

(Step S701) The facility reception unit A45 determines whether or not delivery cylinder information and so on have been received. If delivery cylinder information and so on have been received, processing proceeds to step S702, and if delivery cylinder information and so on have not been received, processing returns to step S701.

(Step S702) The facility processing unit A43 acquires time information from a clock (not shown).

(Step S703) The facility processing unit A43 forms delivery cylinder information and so on to be transmitted, using the delivery cylinder information and so on received in step S701 and the time information acquired in step S702.

(Step S704) The facility transmission unit A44 transmits the delivery cylinder information and so on formed in step S703 to the information processing apparatus A2. Processing returns to step S701.

In the flowchart shown in FIG. 7, processing is terminated when power is turned off or an interruption is made to terminate the processing.

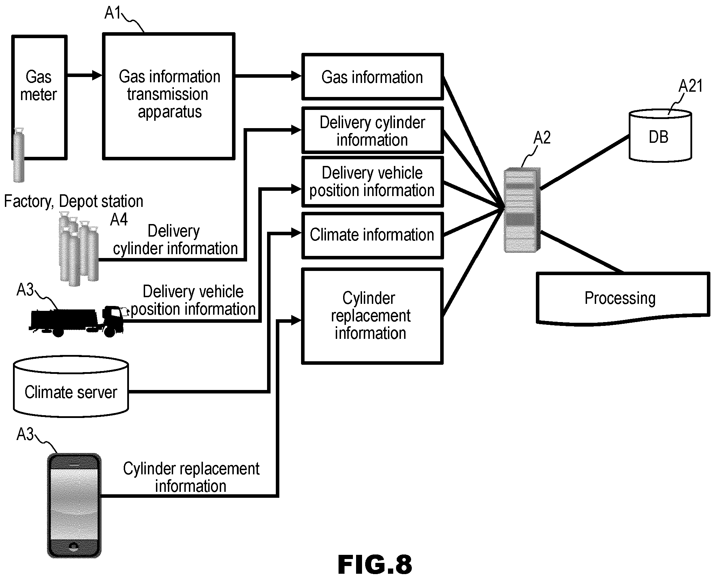

The following describes specific examples of operations that are performed by the information system A according to the present embodiment with reference to a conceptual diagram (FIG. 8) for processing that is performed by the information system A. Note that the conceptual diagram for the system structure of the information system A is FIG. 1.

In the information system A, as described above, pieces of gas information are transmitted from the gas information transmission apparatuses A1 to the information processing apparatus A2 at appropriate points in time, and are accumulated in the information processing apparatus A2. Also, pieces of delivery vehicle position information are transmitted from the deliverer terminals A3 to the information processing apparatus A2, and are accumulated in the information processing apparatus A2. Also, pieces of delivery cylinder information are transmitted from the facility terminals A4 to the information processing apparatus A2, and are accumulated in the information processing apparatus A2. Also, pieces of cylinder replacement information are transmitted from the deliverer terminals A3 to the information processing apparatus A2, and are accumulated in the information processing apparatus A2. Also, the information processing apparatus A2 receives and accumulates climate information from a climate server (not shown). Note that the climate server is a server that stores climate information.

The deliverer terminals A3 that transmit delivery vehicle position information and the deliverer terminals A3 that transmit the deliverer terminals A3 are terminals used by deliverers, and, needless to say, they may be different terminals.

In the information processing apparatus A2, the processing unit A23 performs various kinds of processing, using various kinds of information accumulated in the DB (A21). Examples of the various kinds of processing include delivery date prediction processing, delivery control processing, futures trading processing, residence stay processing, energy optimum plan presentation processing, and household credit rating acquisition processing. Examples of the various kinds of processing may also include processing performed to simply output the results of the above-described statistical processing and various kinds of accumulated information.

As described above, according to the present embodiment, the gas information and so on that contain gas use information regarding the use of LPG cylinders can be collected and used.

In addition, according to the present embodiment, the power consumption of the power source of the gas information transmission apparatuses A1 can be reduced by efficiently transmitting gas information.

In addition, according to the present embodiment, delivery cylinder information that is information regarding the cylinders to be delivered can also be collected and used.

In addition, according to the present embodiment, delivery cylinder information that is information that contains cylinder type information can also be collected and used.

In addition, according to the present embodiment, climate information can also be acquired and used.

Furthermore, according to the present embodiment, cylinder replacement information can be received and used when a cylinder is replaced.

Note that the processing in the present embodiment may be realized using software. This software may be distributed through software downloading or the like. Also, this software may be recorded on a recording medium such as a CD-ROM and distributed. Note that the same applies to the other embodiments in the present description. The software that realizes the gas information transmission apparatuses A1 in the present embodiment is the program described below. That is to say, this program is a program that enables a computer that can access a terminal storage unit that stores pieces of gas information as of two or more points in time to function as: a terminal acquisition unit that acquires gas information that is information that includes gas use information regarding use of gas in an LPG cylinder and corresponds to a cylinder identifier that identifies an LPG cylinder; a terminal accumulation unit that accumulates the gas information acquired by the terminal acquisition unit, in the terminal storage unit; a terminal transmission unit that, when a predetermined condition is satisfied, transmits the pieces gas information as of the two or more pints in time stored in the terminal storage unit to the information processing apparatus in association with a customer identifier.

The software that realizes the information processing apparatus A2 in the present embodiment is the program described below. That is to say, this program is a program that enables a computer that can access a gas storage unit that stores two or more pieces of gas information in association with time information that specifies time, and with a customer identifier, to function as: a gas information reception unit that receives gas information that is associated with a customer identifier, from a gas information transmission apparatus that includes a terminal acquisition unit that acquires gas information that is information that includes gas use information regarding use of gas in an LPG cylinder and corresponds to a customer identifier, and a terminal transmission unit that transmits the gas information acquired by the terminal acquisition unit to the information processing apparatus; a gas information accumulation unit that accumulates the gas information received by the gas information reception unit, in the gas information storage unit in association with time information, and with a customer identifier; and a processing unit that performs predetermined processing, using two or more pieces of gas information stored in the gas information storage unit.

### Embodiment 2

The present embodiment describes an information system that realizes efficient delivery of gas cylinders to customers in the event of gas shortage or the like.

The present embodiment also describes an information system that includes information processing apparatus that determines a delivery vehicle that is to deliver a gas cylinder to a customer in the case of gas shortage or the like, and transmits information regarding the customer to a deliverer terminal, and a deliverer terminal that receives information regarding the customer. Note that the information regarding a customer to be transmitted is an updated delivery list, for example.

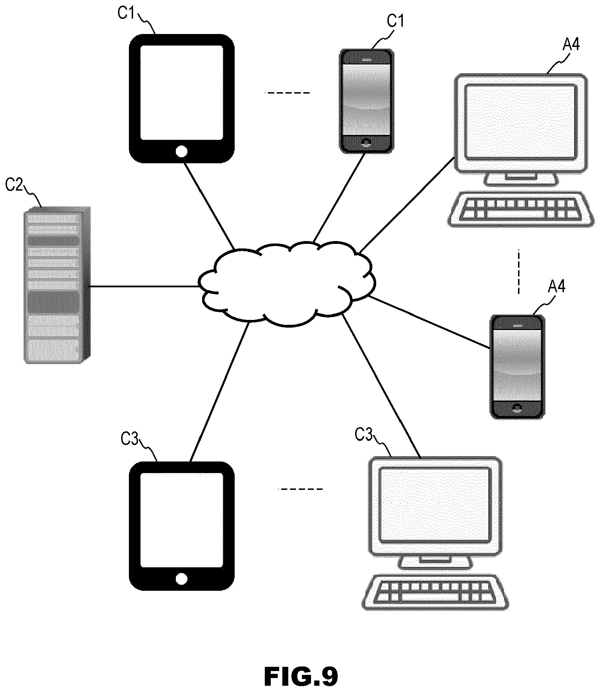

FIG. 9 is a conceptual diagram for an information system C according to the present embodiment. The information system C includes one or more terminal apparatuses C1, an information processing apparatus C2, one or more deliverer terminals C3, and one or more facility terminals A4.

Terminal apparatuses C1 are, for example, terminals that are used by administrators of the information system C. The terminal apparatuses C1 are, for example, smartphones, tablet terminals, so-called personal computers, or the like, but there is no limitation on the type thereof.

The information processing apparatus C2 is a server apparatus that performs delivery control processing. That is to say, the information processing apparatus C2 is an apparatus that determines a delivery vehicle that delivers a gas cylinder in the case of customer emergency such as gas shortage. The information processing apparatus C2 can be realized using a so-called cloud server or an ASP server, but there is no limitation on the type thereof. Note that the information processing apparatus C2 may have some or all of the functions of the information processing apparatus A2. That is to say, the information processing apparatus C2 may be an information processing apparatus A2 that performs delivery control processing.

The deliverer terminals C3 are terminals that are used by deliverers. The deliverer terminals C3 are, for example, smartphones, tablet terminals, so-called personal computers, or the like, but there is no limitation on the type thereof. The deliverer terminals C3 have a communication function. Note that the deliverer terminals C3 may be terminals carried by deliverers, or may be terminals mounted on delivery vehicles (for example, on-board navigation apparatuses). In addition, some functions of the deliverer terminals C3, which will be described later, may be performed by the terminals carried by the deliverers, and other functions may be performed by the terminals mounted on the delivery vehicles. That is to say, as a matter of course, the apparatuses such as the deliverer terminals C3 may be realized using two or more apparatuses. Furthermore, the deliverer terminals C3 may be able to realize some or all of the functions of the deliverer terminals A3.

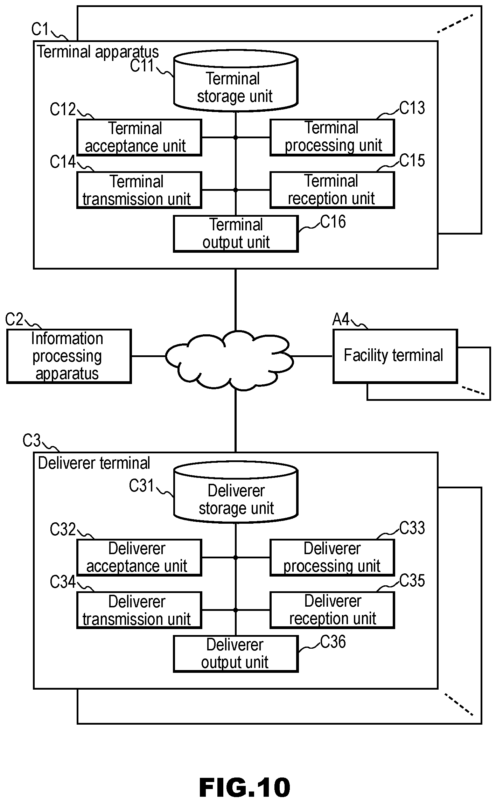

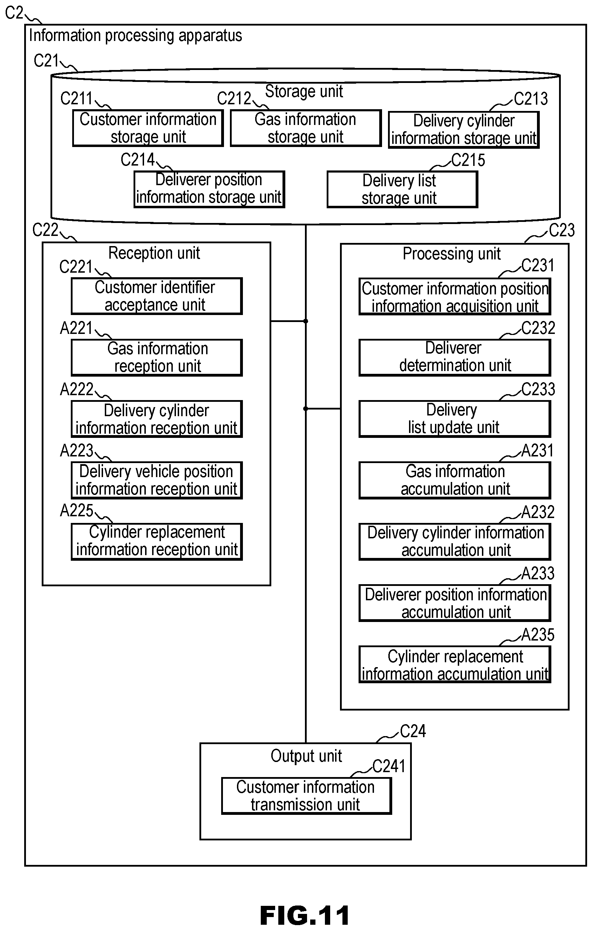

FIG. 10 is a block diagram for the information system C according to the present embodiment. FIG. 11 is a block diagram for the information processing apparatus C2 that is included in the information system C.

Each terminal apparatus C1 includes a terminal storage unit C11, a terminal acceptance unit C12, a terminal processing unit C13, a terminal transmission unit C14, a terminal reception unit C15, and a terminal output unit C16.

The information processing apparatus C2 includes a storage unit C21, a reception unit C22, a processing unit C23, and a transmission unit C24. The storage unit C21 includes the customer information storage unit A211, the gas information storage unit A212, the delivery cylinder information storage unit A213, the delivery vehicle position information storage unit A214, and a delivery list storage unit C211. The reception unit C22 includes a customer identifier acceptance unit C221, the gas information reception unit A221, the delivery cylinder information reception unit A222, the delivery vehicle position information reception unit A223, and the cylinder replacement information reception unit A225. The processing unit C23 includes a customer information position information acquisition unit C231, a delivery vehicle determination unit C232, a delivery list update unit C233, the gas information accumulation unit A231, the delivery cylinder information accumulation unit A232, the delivery vehicle position information accumulation unit A233, and the cylinder replacement information accumulation unit A235. The transmission unit C24 includes a customer information transmission unit C241.

Each deliverer terminal C3 includes a deliverer storage unit C31, a deliverer acceptance unit C32, a deliverer processing unit C33, a deliverer transmission unit C34, a deliverer reception unit C35, and a deliverer output unit C36.

Each facility terminal A4 includes a facility storage unit A41, a facility acceptance unit A42, a facility processing unit A43, a facility transmission unit A44, a facility reception unit A45, and a facility output unit A46.

The terminal storage unit C11 included in each terminal apparatus C1 stores various kinds of information. Examples of the various kinds of information include a customer identifier and a terminal identifier that identifies the terminal apparatus C1. Note that this customer identifier is the identifier of a customer to which a gas cylinder is to be delivered immediately due to gas shortage or the like.

The terminal acceptance unit C12 accepts various kinds of information, instructions, and so on. Examples of the various kinds of information, instructions, and so on include a customer identifier. A customer identifier is information that identifies a customer.

Any input means may be employed to input various kinds of information, instructions, and so on, such as a touch panel, a keyboard, a mouse, a menu screen, or the like. The terminal acceptance unit C12 can be realized using a device driver for the input means such as a touch panel or a keyboard, or control software or the like for controlling the menu screen.

The terminal processing unit C13 performs various kinds of processing. Examples of the various kinds of processing include processing that is performed by the terminal acceptance unit C12 to convert the various kinds of information, instructions, and so on accepted thereby into a data structure that contains the various kinds of information, instructions, and so on to be transmitted. Examples of the various kinds of processing also include processing that is performed to convert the information received by the terminal reception unit C15 so as to have a data structure that is to be output.

The terminal transmission unit C14 transmits various kinds of information. Examples of the various kinds of information include a customer identifier.

The terminal reception unit C15 receives various kinds of information. Examples of the various kinds of information include information regarding a deliver, or a delivery list. Note that deliverer person information is information regarding the deliverer that delivers a gas cylinder to a customer who has run out of gas, for example, and is a name, a deliverer identifier, or the like, for example.

The terminal output unit C16 outputs various kinds of information. Examples of the various kinds of information include information formed by the terminal processing unit C13. Examples of the various kinds of information include information regarding a deliver, or a delivery list.

Here, "output" is a concept that includes means displaying on a display device, projection with a projector, printing with a printer, sound output, transmission to an external apparatus, accumulation on a recording medium, delivery of processing results to another processing apparatus or another program, and so on.

The storage unit C21 included in the information processing apparatus C2 stores various kinds of information. Examples of the various kinds of information include customer information, gas information, delivery cylinder information, and delivery vehicle position information. Examples of the various kinds of information may also include one or more pieces of information that indicate correspondence between a delivery vehicle identifier and a deliverer identifier. Information that indicates correspondence between a delivery vehicle identifier and a deliverer identifier is, for example, information that contains a delivery vehicle identifier and a deliverer identifier, or information regarding a link between a delivery vehicle identifier and a deliverer identifier. Examples of the various kinds of information include unique information that is associated with a deliverer identifier. Examples of unique information include "whether or not to permit addition or change of a delivery destination", "information that specifies whether or not to permit overtime", "the final time available for work", and "information that specifies whether or not to permit a change in the delivery route on a short notice". Unique information can be changed upon a declaration by a deliverer, for example.

The customer information storage unit A211 stores one or more pieces of customer information that each contain a customer identifier and customer position information. Customer position information is information that specifies the position of a customer identified by a customer identifier. Customer position information is, for example, and address, or (latitude,longitude). It is preferable that customer information includes cylinder type information that specifies the type of the cylinder used by the customer. It is also preferable that customer information contains cylinder number information that specifies the number of cylinders installed in the customer's home. Note that customer information may contain two or more sets each consisting of cylinder type information and cylinder number information. Cylinder type information is information that specifies the weight of the cylinder, for example, and indicates, "50 Kg", "30 Kg", or "20 Kg", for example.

The delivery cylinder information storage unit A213 stores one or more pieces of delivery cylinder information in association with a delivery vehicle identifier that identifiers a delivery vehicle. Delivery cylinder information is information regarding a cylinder that is to be delivered by a delivery vehicle. It is preferable that delivery cylinder information is associated with a cylinder identifier. It is preferable that delivery cylinder information includes cylinder type information. It is preferable that delivery cylinder information contains cylinder number information that specifies the number of cylinders that are being delivered. Cylinder number information is information that specifies the number of cylinders remaining in the delivery vehicle corresponding thereto. Cylinder number information is information that specifies the number of cylinders that can be delivered by the delivery vehicle corresponding thereto. The cylinder number information may be acquired based on the number of pieces of delivery cylinder information, for example. In such a case, delivery cylinder information is information that corresponds to one cylinder.

The delivery vehicle position information storage unit A214 stores one or more pieces of delivery vehicle position information associated with a delivery vehicle identifier. Delivery vehicle position information is information that specifies the position of a delivery vehicle. Delivery vehicle position information is (latitude,longitude), for example, but may be any information that can specify a position or an area such as an identifier of the nearest facility, other than (latitude,longitude).

The delivery list storage unit C211 stores one or more delivery lists in association with a delivery vehicle identifier. The delivery list may be associated with a deliverer identifier. The delivery vehicle identifier may be the same as the deliverer identifier. The delivery list typically contains two or more pieces of delivery destination information regarding the delivery destination of a gas cylinder. The delivery destination information here contains, for example, the name of a customer, a zip code, an address, and cylinder type information that specifies the type of a gas cylinder to be used. Delivery destination information may contain part or the entirety of the customer information. Delivery destination information may only contain a customer identifier.

The reception unit C22 receives various kinds of information. Examples of the various kinds of information include a customer identifier, customer information, delivery completion information, gas information, delivery cylinder information, and delivery vehicle position information. The reception unit C22 receives a customer identifier from a terminal apparatus C1, for example. The reception unit C22 receives delivery completion information from the terminal apparatuses C3, for example. Note that delivery completion information contains, for example, a customer identifier, cylinder type information that specifies the type of the delivered cylinder, and cylinder number information that specifies the number of delivered cylinders. Note that, for example, if delivery completion information contains a customer identifier and does not contain cylinder type information or cylinder number information, the cylinder type information and cylinder number information corresponding to the customer identifier are acquired from the customer information storage unit A211, for example.

The customer identifier acceptance unit C221 accepts a customer identifier that identifies a customer whose remaining amount of gas is small enough to satisfy a predetermined condition. The fact that "the amount of gas remaining is small enough to satisfy a predetermined condition" means, for example, that the gas has run out, the amount of gas remaining is no greater than or less than a threshold value, the cumulative amount of gas used is no less than or greater than a threshold value, or the like.

Here, "acceptance" means reception of information transmitted via a wired or wireless communication line, but, for example, may be regarded as a concept that includes acceptance of information input from an input device such as a keyboard, a mouse, or a touch panel, or acceptance of information read from a recording medium such as an optical disk, a magnetic disk, or a semiconductor memory.

The processing unit C23 performs various kinds of processing. Examples of the various kinds of processing include the processing that is performed by the customer information position information acquisition unit C231, the delivery vehicle determination unit C232, the delivery list update unit C233, the gas information accumulation unit A231, the delivery cylinder information accumulation unit A232, the delivery vehicle position information accumulation unit A233, and the cylinder replacement information accumulation unit A235.

The processing unit C23 performs processing on the deliverer identifier that is included in the received delivery completion information or customer information in the delivery list paired with the delivery vehicle identifier, and is customer information corresponding to the customer identifier included in the received delivery completion information, so that the completion of delivery to the customer can be discerned. Note that such processing is, for example, the deletion of customer information corresponding to the customer identifier included in the received delivery completion information, the addition of delivery completion information, or the like.

The processing unit C23 subtracts the number of cylinders indicated by cylinder number information that specifies the number of cylinders that have been delivered, from cylinder number information contained in the delivery cylinder information paired with the delivery vehicle identifier, and accumulates the updated cylinder number information in the delivery cylinder information storage unit A213. Such a delivery vehicle identifier is information that is included in the received delivery completion information, or information that is paired with the deliverer identifier included in the received delivery completion information.

The processing unit C23 acquires, for example, cylinder number information that is contained in the customer information that is in the delivery list and is customer information corresponding to the customer identifier included in the received delivery completion information, as cylinder number information that specifies the number of cylinders that have been delivered. Also, the processing unit C23 acquires, for example, cylinder number information that is included in the received delivery completion information, as cylinder number information that specifies the number of cylinders that have been delivered.

The customer information position information acquisition unit C231 acquires the customer position information paired with the customer identifier accepted by the customer identifier acceptance unit C221, from the customer information storage unit A211.

The delivery vehicle determination unit C232 determines the delivery vehicle that is to deliver a cylinder, using the customer position information acquired by the customer information position information acquisition unit C231 and the set of pieces of information composed of delivery vehicle position information and delivery cylinder information. Note that the delivery vehicle position information and the delivery cylinder information included in one set are pieces of information each paired with the same delivery vehicle identifier. The determination of a delivery vehicle is, for example, the acquisition of a delivery vehicle identifier, or the acquisition of information regarding the deliverer to be transmitted (for example, contact information or the like).

If cylinder-related information regarding customer information and delivery cylinder information paired with the delivery vehicle identifier satisfy a predetermined condition, the delivery vehicle determination unit C232 determines the delivery vehicle identified by the delivery vehicle identifier, as a delivery vehicle that is to deliver a cylinder.

Note that cylinder-related information and delivery cylinder information are one or more pieces of information of: cylinder number information; and cylinder type information.

The delivery vehicle determination unit C232 determines a delivery vehicle that corresponds to delivery vehicle position information that satisfies a cylinder condition and a position condition.

The cylinder condition is a condition regarding a cylinder. The cylinder condition is a condition related to a relationship between the cylinder number information acquired using the delivery cylinder information paired with the delivery vehicle identifier, and cylinder type information, and a relationship between the cylinder number information contained in the customer information, and cylinder type information. The cylinder condition is, for example, that "the cylinder type information included in the delivery cylinder information paired with the delivery vehicle identifier matches the cylinder type information contained in customer information", and "information on the number of cylinders acquired using the delivery cylinder information paired with the delivery vehicle identifier >= the total number of cylinders contained in customer information regarding the customer to which a cylinder is scheduled to be delivered + cylinder number information contained in the customer information". The cylinder condition is, for example, that "the cylinder number information contained in the cylinder-related information regarding customer information <= the cylinder number information contained in delivery cylinder information" is satisfied.

The position condition is a condition related to position information that includes customer position information. The position condition is, for example, a condition regarding the distance between the position specified by customer position information and the position specified by delivery vehicle position information. The position condition is, for example, that the distance between the position specified by customer position information and the position specified by delivery vehicle position information is no greater than or less than a threshold value. The position condition indicates, for example, the delivery vehicle that corresponds to the delivery vehicle position information for which the distance between the position specified by customer position information and the position specified by delivery vehicle position information is the smallest among the delivery vehicles that satisfy the cylinder condition.

The delivery vehicle determination unit C232 determines the delivery vehicle that is to deliver a cylinder, using the cylinder number information and cylinder type information acquired using the delivery cylinder information paired with the delivery vehicle identifier, the cylinder type information contained in the customer information, customer position information, and the delivery vehicle position information paired with the delivery vehicle identifier, for example. That is to say, for example, the delivery vehicle determination unit C232 selects a delivery vehicle on which the required number of gas cylinders for the customer of the required type for the customer are loaded, and that is closes to the position of the customer.

For example, if the cylinder number information acquired using the delivery cylinder information paired with a delivery vehicle identifier satisfies the condition regarding the cylinder number information contained in the customer information, the delivery vehicle determination unit C232 determines the delivery vehicle identified by the delivery vehicle identifier, as a delivery vehicle that is to deliver the cylinders. The cylinder number information acquired using delivery cylinder information is, for example, the cylinder number information contained in cylinder number information, and cylinder number information that indicates the number of pieces of delivery cylinder information. That is to say, for example, the delivery vehicle determination unit C232 selects a delivery vehicle on which the required number of gas cylinders for the customer are loaded.

For example, if the cylinder type information contained in the delivery cylinder information paired with a delivery vehicle identifier satisfies the condition regarding the cylinder type information contained in the customer information, the delivery vehicle determination unit C232 determines the delivery vehicle identified by the delivery vehicle identifier, as a delivery vehicle that is to deliver the cylinders. That is to say, for example, the delivery vehicle determination unit C232 selects a delivery vehicle on which the required type of gas cylinders for the customer are loaded.

For example, cylinder number information and the cylinder type information acquired using the delivery cylinder information paired with a delivery vehicle identifier satisfies a condition regarding the cylinder number information and cylinder type information contained in customer information, the delivery vehicle determination unit C232 determines the delivery vehicle identified by the delivery vehicle identifier, as the delivery vehicle that is to deliver cylinders. That is to say, for example, the delivery vehicle determination unit C232 selects a delivery vehicle on which the required type of gas cylinders for the customer are loaded.

The delivery vehicle determination unit C232 references a deliverer identifier or a delivery list that is paired with a delivery vehicle identifier, and selects a deliverer or a delivery vehicle that has a low load and on which a gas cylinder required by the customer is loaded, for example. The fact that the load is low means that the number of customers scheduled for delivery in the future included in the delivery list is the smallest, the number of customers scheduled for delivery in the future in the delivery list is no greater than a threshold value, or the like. That is to say, the delivery vehicle determination unit C232 references a deliverer identifier or a delivery list that is paired with a delivery vehicle identifier, and selects a delivery vehicle that is specified by the deliverer identifier of a delivery whose load can be determined as being low enough to satisfy a predetermined condition.

The delivery vehicle determination unit C232 acquires unique information regarding the deliverer paired with the delivery vehicle identifier, from the storage unit C21, for example. Thereafter, the delivery vehicle determination unit C232 determines whether or not the unique information satisfies the condition (for example, whether or not the addition or change of the delivery destination is permitted), and if the unique information satisfies the condition (for example, the addition or change of the delivery destination is permitted), the delivery vehicle determination unit C232 does not select the deliverer as a deliverer that delivers gas cylinders to a new customer.

The delivery list update unit C233 acquires the delivery list corresponding to the delivery vehicle determined by the delivery vehicle determination unit C232, and acquires an updated delivery list by adding at least part of the customer information paired with the customer identifier, to the delivery list. Note that there is no limitation on the method for updating the delivery list. The delivery list is updated through, for example, "the addition of at least part of the customer information paired with the customer identifier, to the end of the list", "the insertion of at least part of the customer information paired with the customer identifier", or "the addition of insertion of at least part of the customer information paired with the customer identifier, and the deletion of one or more scheduled delivery destinations".

It is preferable that, when updating a delivery list, the delivery list update unit C233 inserts at least part of the customer information paired with the customer identifier, into the delivery list, so that the delivery cost is low enough to satisfy a predetermined condition (for example, the delivery cost is the lowest), using the customer position information contained in the customer information paired with the customer identifier. That is to say, it is preferable that the delivery list update unit C233 inserts at least part of the customer information paired with the customer identifier, between two consecutive pieces of customer position information that correspond to the delivery destination in the delivery list for the scheduled delivery in the future, and that are closest to each other, for example. Also, the delivery list update unit C233 may determine the movement order of two or more points so as to minimize the delivery cost, and form the delivery list according to the movement order, using one or more pieces of customer position information in the delivery list for the scheduled delivery in the future, and the customer position information contained in the customer information paired with the customer identifier. Note that the processing through which the movement order that minimizes the delivery cost is determined when passing through a plurality of points is a well-known technique as a traveling salesman problem, and therefore the detailed description thereof will be omitted. The delivery cost is a load or cost at the time of delivery, and is, for example, information proportional to a physical distance or a time distance.

The transmission unit C24 transmits various kinds of information. Examples of the various kinds of information include customer information. Customer information may be a delivery list.

The customer information transmission unit C241 transmits customer information that is paired with a customer identifier, to the deliverer terminal C3 of the delivery vehicle determined by the delivery vehicle determination unit C232.

The customer information transmission unit C241 transmits the delivery list updated by the delivery list update unit C233, to the deliverer terminal C3 of the delivery vehicle determined by the delivery vehicle determination unit C232, for example. That is to say, customer information may be regarded as information with which a delivery list is formed.

The deliverer storage unit C31 included in each deliverer terminal C3 stores various kinds of information. Examples of the various kinds of information include a deliverer identifier or a delivery vehicle identifier.

The deliverer acceptance unit C32 accepts various kinds of information, instructions, and so on. Examples of the various kinds of information, instructions, and so on include delivery completion information indicating that delivery has been completed. Delivery completion information typically contains a customer identifier that identifies a customer to which a cylinder has been delivered.

Any input means may be employed to input various kinds of information, such as a touch panel, a keyboard, a mouse, a menu screen, or the like. The deliverer acceptance unit C32 can be realized using a device driver for the input means such as a touch panel or a keyboard, or control software or the like for controlling the menu screen.

The deliverer processing unit C33 performs various kinds of processing. Examples of the various kinds of processing include processing through which information and so on accepted by the deliverer acceptance unit C32 is converted into information and so on that has a structure to be transmitted, processing through which information received by the deliverer reception unit C35 is converted into information that has a structure to be output, and so on.

The deliverer transmission unit C34 transmits various kinds of information to the information processing apparatus C2. Examples of the various kinds of information include delivery completion information.

The deliverer reception unit C35 receives various kinds of information from the information processing apparatus C2. Examples of the various kinds of information include customer information, a delivery list, and so on.

The deliverer output unit C36 outputs various kinds of information. Examples of the various kinds of information include customer information and a delivery list. Here, "output" typically means displaying on a display device.

It is preferable that the terminal storage unit C11, the storage unit C21, the customer information storage unit A211, the gas information storage unit A212, the delivery cylinder information storage unit A213, the delivery vehicle position information storage unit A214, the delivery list storage unit C211, and the deliverer storage unit C31 are realized using a non-volatile recording medium, but they can be realized using a volatile recording medium.

There is no limitation on the process in which information is stored in the terminal storage unit C11 and so on. For example, information may be stored in the terminal storage unit C11 or the like via a recording medium, or information transmitted via a communication line or the like may be stored in the terminal storage unit C11 or the like, or information input via an input device may be stored in the terminal storage unit C11 or the like.

The terminal processing unit C13, the processing unit C23, the customer information position information acquisition unit C231, the delivery vehicle determination unit C232, the delivery list update unit C233, and the deliverer processing unit C33 can typically be realized using an MPU, a memory, or the like. The processing procedures performed by the terminal processing unit C13 typically are realized using software, and the software is recorded on a recording medium such as a ROM. However, such processing procedures may be realized using hardware (a dedicated circuit).

The terminal transmission unit C14, the transmission unit C24, the customer information transmission unit C241, and the deliverer transmission unit C34 typically are realized using a wireless or wired communication means, but may be realized using a broadcast means.

The terminal reception unit C15, the reception unit C22, the customer identifier acceptance unit C221, and the deliverer reception unit C35 typically are realized using a wireless or wired communication means, but may be realized using a means for receiving broadcast.

The terminal output unit C16 and the deliverer output unit C36 may be regarded as including or not including an output device such as a display or a speaker. The terminal output unit C16 can be realized using the driver software of the output device, the driver software of the output device and the output device, or the like.

Next, operations that are performed by the information system C will be described. First, operations that are performed by the terminal apparatuses C1 will be described.

The terminal acceptance unit C12 of each terminal apparatus C1 accepts a customer identifier. Next, the terminal processing unit C13 forms a customer identifier that is to be transmitted. Next, the terminal transmission unit C14 transmits the formed customer identifier to the information processing apparatus C2. Next, the terminal reception unit C15 receives information regarding the deliverer that delivers a gas cylinder to a customer, in response to the transmission of the customer identifier, for example. Thereafter, the terminal processing unit C13 forms information that is to be output, using the received information. Next, the terminal output unit C16 outputs information regarding the deliverer that delivers a gas cylinder to a customer.

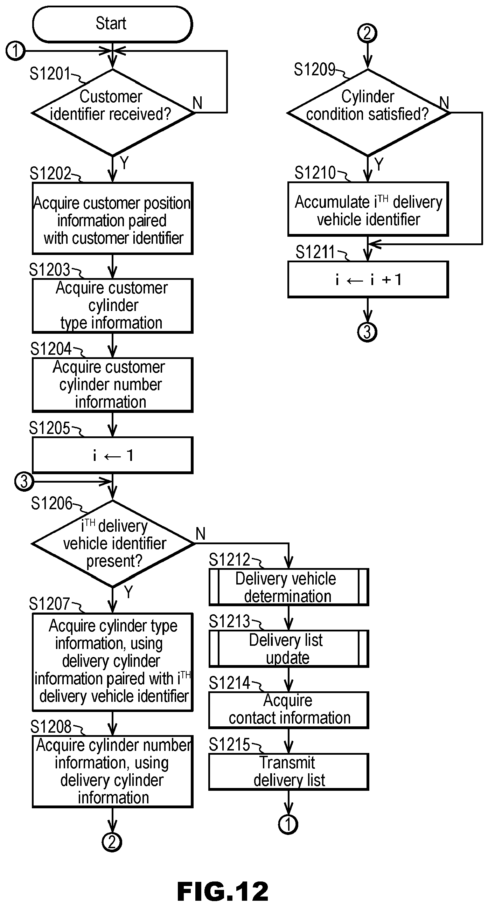

Next, examples of operations that are performed by the information processing apparatus C2 will be described with reference to the flowchart shown in FIG. 12.

(Step 1201) The customer identifier acceptance unit C221 determines whether or not a customer identifier that identifies a customer whose amount of remaining gas is small enough to satisfy a predetermined condition has been accepted. If a customer identifier has been accepted, processing proceeds to Step 1202, and if a customer identifier has not been accepted, processing returns to Step 1201. Note that a customer whose amount of remaining gas is small enough to satisfy a predetermined condition is a customer who has run out of gas, for example.

(Step 1202) The customer information position information acquisition unit C231 acquires the customer position information paired with the customer identifier accepted in Step 1201, from the customer information storage unit A211.

(Step 1203) The delivery vehicle determination unit C232 acquires the cylinder type information contained in the customer information paired with the customer identifier accepted in Step 1201. Note that such cylinder type information is information that specifies the type of the cylinder used by the customer.

(Step 1204) The delivery vehicle determination unit C232 acquires the cylinder number information contained in the customer information paired with the customer identifier accepted in Step 1201. Note that such cylinder number information is information that specifies the number of cylinders that are to be delivered to a customer all at once.

(Step 1205) The delivery vehicle determination unit C232 substitutes 1 for the counter i.

(Step 1206) The delivery vehicle determination unit C232 determines whether or not the i^{th} delivery vehicle identifier is present in the delivery cylinder information storage unit A213. If the i^{th} delivery vehicle identifier is present, processing proceeds to Step 1207, and if the i^{th} delivery vehicle identifier is not present, processing proceeds to Step 1212. Note that the delivery cylinder information in the delivery cylinder information storage unit A213 is associated with the delivery vehicle identifier.

(Step 1207) The delivery vehicle determination unit C232 acquires the cylinder type information contained in the delivery cylinder information paired with the i^{th} delivery vehicle identifier in the delivery cylinder information storage unit A213. Note that such cylinder type information is cylinder type information regarding a delivery vehicle.

(Step 1208) The delivery vehicle determination unit C232 acquires the cylinder number information contained in the delivery cylinder information paired with the i^{th} delivery vehicle identifier in the delivery cylinder information storage unit A213. Note that such cylinder number information is cylinder number information regarding a delivery vehicle.

(Step 1209) The delivery vehicle determination unit C232 determines whether or not the cylinder condition is satisfied, using the cylinder type information regarding the customer acquired in Step 1203, the cylinder number information regarding the customer required in Step 1204, the cylinder type information regarding the delivery vehicle acquired in Step 1207, and the cylinder number information regarding the delivery vehicle acquired in Step 1208. If the cylinder condition is satisfied, processing proceeds to Step 1210, and if the cylinder condition is not satisfied, processing proceeds to Step 1211.

(Step 1210) The delivery vehicle determination unit C232 temporarily accumulates the i^{th} delivery vehicle identifier in a buffer.

(Step 1211) The delivery vehicle determination unit C232 increments the counter i by 1. Processing returns to Step 1206.

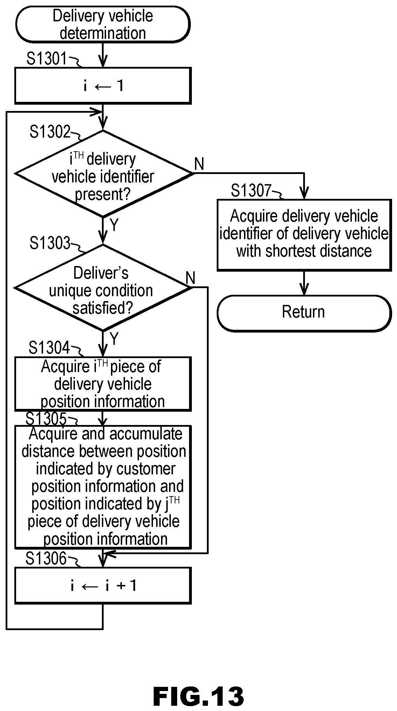

(Step 1212) The delivery vehicle determination unit C232 performs delivery vehicle determination processing. An example of delivery vehicle determination processing will be described with reference to the flowcharts shown in FIGS. 13 to 15.

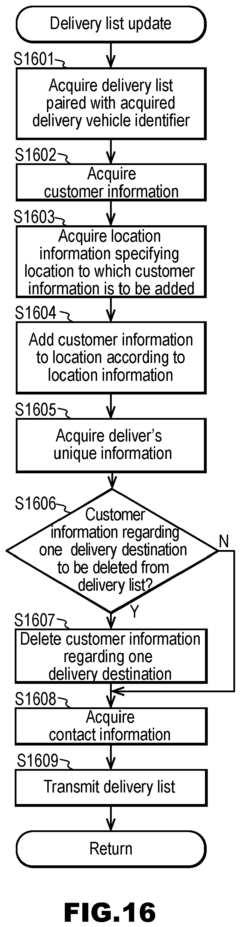

(Step 1213) The delivery list update unit C233 performs delivery list update processing. An example of delivery list update processing will be described with reference to the flowchart shown in FIG. 16.

(Step 1214) The customer information transmission unit C241 acquires contact information that is paired with the customer identifier received in Step 1201, from the customer information storage unit A211.

(Step 1215) The customer information transmission unit C241 transmits the delivery list updated in Step 1213, to the contact destination specified by the contact information. Processing returns to Step 1201.

In the flowchart shown in FIG. 12, processing is terminated when power is turned off or an interruption is made to terminate the processing.

Next, a first example of the delivery vehicle determination processing in Step 1212 will be described with reference to the flowchart shown in FIG. 13.

(Step 1301) The delivery vehicle determination unit C232 substitutes 1 for the counter i.

(Step 1302) The delivery vehicle determination unit C232 determines whether or not the i^{th} delivery vehicle identifier is present in the delivery vehicle identifiers temporarily accumulated in the buffer in Step 1210. If the i^{th} delivery vehicle identifier is present, processing proceeds to Step 1303, and if the i^{th} delivery vehicle identifier is not present, processing proceeds to Step 1307.

(Step 1303) The delivery vehicle determination unit C232 acquires unique information regarding the deliverer paired with the i^{th} delivery vehicle identifier, from the storage unit C21. Thereafter, the delivery vehicle determination unit C232 determines whether or not the unique information satisfies the condition (for example, whether or not the addition or change of the delivery destination is permitted). If the condition is satisfied, processing proceeds to Step 1304, and if the condition is not satisfied, processing proceeds to Step 1306. Note that the condition is satisfied when the unique information indicates that "change in the delivery destination is permitted", when "overtime is permitted", when "a change in the delivery route on a short notice is permitted", when "the final time available for work" is not exceeded even if a delivery destination is added, and so on, for example. Note that "the final time available for work" is paired with the delivery vehicle identifier or the deliverer identifier and is stored in the storage unit C21.

(Step 1304) The delivery vehicle determination unit C232 acquires deliverer position information paired with the i^{th} delivery vehicle identifier, from the delivery vehicle position information storage unit A214.

(Step 1305) The delivery vehicle determination unit C232 acquires the distance between the position specified by the customer position information and the position specified by the deliverer position information acquired in Step 1304, and accumulates the distance in a buffer (not shown) in pair with the i^{th} delivery vehicle identifier.

Note that such a distance may be a physical distance (spatial distance) when the vehicle moves along a road, a linear distance, or a time (temporal distance) when the vehicle moves. The method for obtaining the physical distance, the linear distance, and the time when moving is a well-known technique, and therefore the detailed description thereof will be omitted.

(Step 1306) The delivery vehicle determination unit C232 increments the counter i by 1. Processing returns to Step 1302.

(Step 1307) The delivery vehicle determination unit C232 determines the shortest distance of the distances accumulated in the buffer (not shown) in Step 1305. Thereafter, the delivery vehicle determination unit C232 acquires the delivery vehicle identifier paired with the shortest distance, from the buffer (not shown). Processing returns to higher level processing.

Note that, in the flowchart shown in FIG. 13, the customer information that contains the customer identifier accepted by the customer identifier acceptance unit C221 is to be registered in a list as a delivery destination before the one or more remaining delivery destinations. That is to say, in the flowchart shown in FIG. 13, location information is information that specifies the first position in the remaining route information, and the delivery vehicle determination unit C232 temporarily stores the location information in a buffer (not shown). Remaining route information is a set that includes part or the entirety of the delivery list and with which the order of the pieces of customer position information of the customers for which delivery has not been completed can be determined. Remaining route information is, for example, a delivery list and route information that are used to deliver the remaining cylinders. Route information is information regarding the road on which the vehicle travels. Note that location information is information that specifies a location in the delivery list.

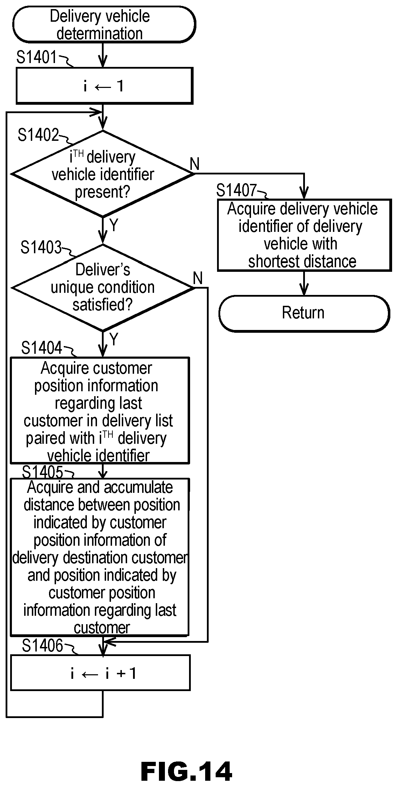

Next, a second example of the delivery vehicle determination processing in Step 1212 will be described with reference to the flowchart shown in FIG. 14.

(Step 1401) The delivery vehicle determination unit C232 substitutes 1 for the counter i.

(Step 1402) The delivery vehicle determination unit C232 determines whether or not the i^{th} delivery vehicle identifier is present in the delivery vehicle identifiers (the delivery vehicle identifiers that satisfy the cylinder condition) temporarily accumulated in the buffer in step 1210. If the i^{th} delivery vehicle identifier is present, processing proceeds to Step 1403, and if the i^{th} delivery vehicle identifier is not present, processing proceeds to Step 1407.

(Step 1403) The delivery vehicle determination unit C232 acquires unique information regarding the deliverer paired with the i^{th} delivery vehicle identifier. Thereafter, the delivery vehicle determination unit C232 determines whether or not the unique information satisfies the condition. If the condition is satisfied, processing proceeds to Step 1404, and if the condition is not satisfied, processing proceeds to Step 1406.

(Step 1404) The delivery vehicle determination unit C232 acquires customer position information regarding the last customer in the delivery list paired with the i^{th} delivery vehicle identifier. Note that the last customer is the last customer for which a cylinder is scheduled to be delivered on the same day.

(Step 1405) The delivery vehicle determination unit C232 acquires the distance between the position specified by the customer position information and the position specified by the customer position information regarding the last customer acquired in Step 1404, and accumulates the distance in a buffer (not shown) in pair with the i^{th} delivery vehicle identifier.

Note that such a distance may be a physical distance (spatial distance), a linear distance, or a time (temporal distance) when the vehicle moves. The physical distance is a moving distance.

(Step 1406) The delivery vehicle determination unit C232 increments the counter i by 1. Processing returns to Step 1402.

(Step 1407) The delivery vehicle determination unit C232 determines the shortest distance of the distances accumulated in the buffer (not shown) in Step 1405. Thereafter, the delivery vehicle determination unit C232 acquires the delivery vehicle identifier paired with the shortest distance. Processing returns to higher level processing.

Note that, in the flowchart shown in FIG. 14, the customer information that contains the customer identifier accepted by the customer identifier acceptance unit C221 is to be registered in a list as the final delivery destination. That is to say, in the flowchart shown in FIG. 14, location information is information that specifies the last position in the remaining route information, and the delivery vehicle determination unit C232 temporarily stores the location information in a buffer (not shown).

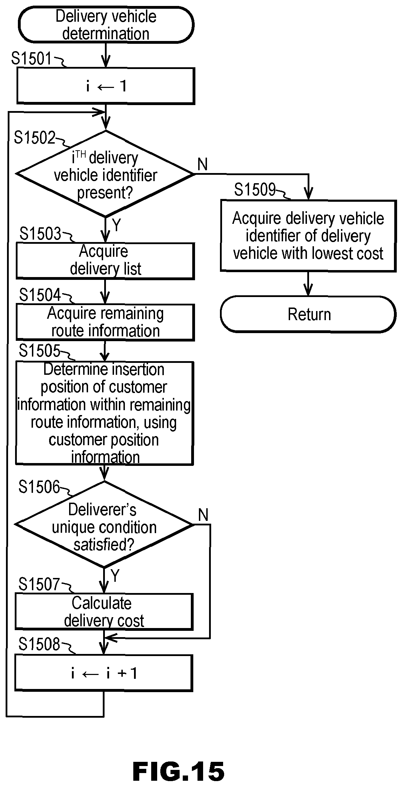

Next, a third example of the delivery vehicle determination processing in Step 1212 will be described with reference to the flowchart shown in FIG. 15.

(Step 1501) The delivery vehicle determination unit C232 substitutes 1 for the counter i.

(Step 1502) The delivery vehicle determination unit C232 determines whether or not the i^{th} delivery vehicle identifier is present in the delivery vehicle identifiers temporarily accumulated in the buffer in step 1210. If the i^{th} delivery vehicle identifier is present, processing proceeds to Step 1503, and if the i^{th} delivery vehicle identifier is not present, processing proceeds to Step 1509.

(Step 1503) The delivery vehicle determination unit C232 acquires a delivery list that is paired with the i^{th} delivery vehicle identifier.

(Step 1504) The delivery vehicle determination unit C232 acquires remaining route information that is a set with which the order of the pieces of customer position information of the customers for which delivery has not been completed can be determined, from the delivery list acquired in Step 1503.

(Step 1505) The delivery vehicle determination unit C232 determines the position at which the customer information that satisfies a predetermined condition is inserted, in the remaining route information, using the customer position information. Note that the delivery vehicle determination unit C232 inserts the customer information in all cases where the customer information can be inserted in the remaining route information, and acquires the delivery cost in each case. Note that the delivery cost is, for example, a distance or a travel time. Also, the delivery vehicle determination unit C232 calculates, for example, a distance loss "(the distance when moving from the first customer position information to the second customer position information via the customer position information acquired in step 1202) - (the distance when moving from the first customer position information to the second customer position information)) when the customer position information acquired in step 1202 is inserted between two consecutive pieces of customer position information (the first customer position information and the second customer position information) in the remaining route information, and determines a position between the two consecutive pieces of customer position information with the smallest distance loss as an insertion position where the customer information acquired in step 1202 is to be inserted. Note that the technique for acquiring a distance or a travel time when moving through a plurality of points in order is a well-known technique. It is preferable that the travel time is the time obtained by adding the driving time for which the delivery vehicle is moving and the working time at each customer. Also note that the working time is, for example, a fixed time (for example, ten minutes).

(Step 1506) The delivery vehicle determination unit C232 acquires unique information regarding the deliverer paired with the i^{th} delivery vehicle identifier, from the storage unit C21. Thereafter, the delivery vehicle determination unit C232 determines whether or not the unique information satisfies the condition. If the condition is satisfied, processing proceeds to Step 1507, and if the condition is not satisfied, processing proceeds to Step 1508.

(Step 1507) The delivery vehicle determination unit C232 calculates the delivery cost in the case where the customer information is inserted in the insertion position determined in Step 1505 in the remaining route information, and temporarily accumulates the delivery cost in pair with the i^{th} delivery vehicle identifier in a buffer (not shown). Note that, if the delivery cost has been calculated, the delivery vehicle determination unit C232 acquires the lowest cost here.

(Step 1508) The delivery vehicle determination unit C232 increments the counter i by 1. Processing returns to Step 1502.

(Step 1509) The delivery vehicle determination unit C232 acquires the delivery vehicle identifier paired with the lowest delivery cost of the delivery costs acquired in Step 1507, from a buffer (not shown). Processing returns to higher level processing.

Note that, in the flowchart shown in FIG. 15, the customer information that contains the customer identifier accepted by the customer identifier acceptance unit C221 is to be registered in a list so that the loss is the smallest. That is to say, in the flowchart shown in FIG. 14, location information is information that specifies a position between the first customer position information and the second customer position information in the remaining route information, and the delivery vehicle determination unit C232 temporarily stores the location information in a buffer (not shown).

Next, the delivery list update processing in Step 1213 will be described with reference to the flowchart shown in FIG. 16.

(Step 1601) The delivery list update unit C233 acquires a delivery list that is paired with the acquired delivery vehicle identifier.

(Step 1602) The delivery list update unit C233 acquires customer information that is paired with the customer identifier accepted in step 1201 and is to be added to the delivery list, from the customer information storage unit A211. Note that information to be added to the delivery list has been determined in advance.

(Step 1603) The delivery list update unit C233 acquires location information that is information regarding the location to which the customer information is to be added.

(Step 1604) The delivery list update unit C233 adds the customer information acquired in Step 1602, to the location according to the location information in the delivery list acquired in Step 1601.

(Step 1605) The delivery list update unit C233 acquires unique information regarding the deliverer paired with the deliverer identifier paired with the acquired delivery vehicle identifier. Note that examples of unique information regarding a deliverer include "information that specifies whether or not to permit overtime", "the final time available for work", and "information that specifies whether or not to permit a change in the delivery route on a short notice".

(Step 1606) The delivery list update unit C233 determines whether or not to delete the customer information regarding the delivery destination customer from the delivery list acquired in Step 1604, using the unique information regarding the deliverer acquired in Step 1605. If the customer information is to be deleted, processing proceeds to Step 1607, and if the customer information is not to be deleted, processing proceeds to Step 1608. Note that the delivery list update unit C233 determines to delete the customer information regarding a delivery destination customer in the delivery list when the acquired unique information regarding the deliverer is "information that indicates that overtime is not permitted", "a change in the delivery route on a short notice is not permitted", or when the work completion time acquired using the travel times of all future routes obtained using the remaining route information before deletion and the customer position information regarding the additional customer is later than the "final time available for work".

Note that the delivery list update unit C233 performs the following determination processing to determine whether or not the "final time available for work" is exceeded. The delivery list update unit C233 acquires delivery vehicle position information and a plurality of pieces of customer position information of the future delivery destinations (including urgent customers) from the delivery list. Then, the delivery list update unit C233 acquires the travel time when the vehicle travels through the positions indicated by the plurality of customer position information in order from the position indicated by the delivery vehicle position information. Also, the delivery list update unit C233 acquires the cumulative time of the respective working times at the customers. Thereafter, the delivery list update unit C233 acquires the current time. Next, the delivery list update unit C233 acquires the work completion time, using the current time, the travel time, and the cumulative working time. Next, the delivery list update unit C233 determines whether or not the work completion time is later than the "final time available for work". Note that the method for obtaining the time for travelling through a plurality of points in order is a known technique. In addition, the cumulative working time is calculated by, for example, multiplying the placement time for one cylinder and the number of delivery destinations. As the cumulative working time, for example, the working time at each customer may be obtained using the number of cylinders. In such a case, the delivery list update unit C233 acquires a longer working time for a larger number of cylinders.

(Step 1607) The delivery list update unit C233 deletes the customer information regarding one delivery destination from the delivery list acquired in Step 1604. Note that the customer information to be deleted is, but not limited to, customer information regarding the customer at the last delivery destination, for example. Alternatively, the deletion of customer information may be the addition of information indicating that delivery is not to be performed, for example. That is to say, the deletion of customer information may be may be performed through any processing as long as it can be discerned that there is no need to deliver a cylinder to the customer.

(Step 1608) The customer information transmission unit C241 acquires contact information that is paired with the deliverer identifier paired with the delivery vehicle identifier of the determined delivery vehicle.

(Step 1609) The customer information transmission unit C241 transmits the updated delivery list to the deliverer specified by the acquired contact information. Processing returns to higher level processing. Note that the transmission of the updated delivery list can be regarded as transmission of customer information.

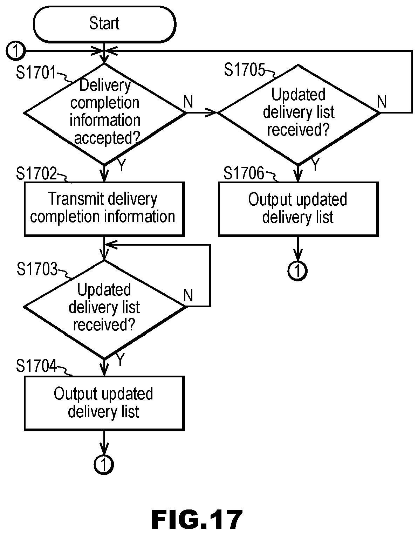

Next, examples of operations that are performed by each deliverer terminal C3 will be described with reference to the flowchart shown in FIG. 17.

(Step 1701) The deliverer acceptance unit C32 determines whether or not delivery completion information has been accepted. If delivery completion information has been accepted, processing proceeds to Step 1702, and if delivery completion information has not been accepted, processing proceeds to Step 1705. Note that delivery completion information contains the customer identifier of a customer to which delivery is complete.

(Step 1702) The deliverer processing unit C33 converts the delivery completion information accepted in Step 1701 into delivery completion information that has a structure to be transmitted. Thereafter, the deliverer transmission unit C34 transmits the delivery completion information to the information processing apparatus C2.

(Step 1703) The deliverer reception unit C35 determines whether or not a delivery list that indicates that a cylinder has been delivered to the customer identified by the customer identifier, from the information processing apparatus C2, in response to the transmission of the delivery completion information. If the delivery list has been received, processing proceeds to Step 1704, and if the delivery list has not been received, processing returns to Step 1703.

(Step 1704) The deliverer processing unit C33 converts the delivery list received in Step 1703, into information that has a structure to be output. The deliverer output unit C36 outputs the delivery list. Processing returns to Step 1701.

(Step 1705) The deliverer reception unit C35 determines whether or not an urgently updated delivery list has been received from the information processing apparatus C2. If the delivery list has been received, processing proceeds to Step 1706, and if the delivery list has not been received, processing returns to Step 1701.

(Step 1706) The deliverer processing unit C33 converts the delivery list received in Step 1705, into information that has a structure to be output. The deliverer output unit C36 outputs the delivery list. Processing returns to Step 1701.

The following describes specific examples of operations that are performed by the information system C according to the present embodiment. Note that the conceptual diagram for the information system C is FIG. 9.

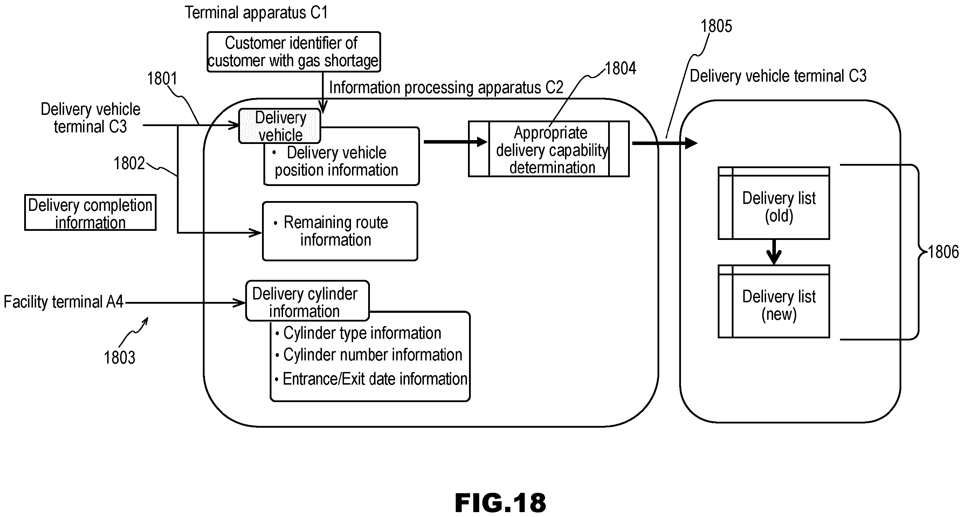

Also, the concept of processing through which the information processing apparatus C2 included in the information system C determines a delivery vehicle is shown in FIG. 18.

Delivery vehicle position information is transmitted from the deliverer terminals C3 to the information processing apparatus C2, and is accumulated in the information processing apparatus C2 (see 1801). Also, delivery completion information is transmitted from the deliverer terminals C3 to the information processing apparatus C2, and remaining route information is updated in the information processing apparatus C2 and is accumulated (see 1802). Also, delivery cylinder information is transmitted from the facility terminals A4 to the information processing apparatus C2, and is accumulated in the information processing apparatus C2 (see 1803). Note that updating the remaining route information may have the same meaning as updating the delivery list.

In such a situation, it is assumed that the customer identifier of a customer who has run out of gas is transmitted from a terminal apparatus C1 to the information processing apparatus C2, for example.

In such a case, the information processing apparatus C2 performs one or more determinations of: cylinder condition determination, position condition determination, and determination using unique information (appropriate delivery capacity determination 2304) to determine the delivery vehicle that is to deliver a cylinder to the customer identified by the customer identifier, using the customer position information paired with the customer identifier, the delivery vehicle position information regarding the delivery vehicle, remaining route information regarding each delivery vehicle, and unique information regarding each deliverer (for example, whether or not overtime is permitted) as described above. Note that the appropriate delivery capacity determination 2304 performed using unique information regarding the deliverer may be performed to add one delivery destination or delay the scheduled date for the delivery destination in the old delivery list to the next day, for example.

Thereafter, the information processing apparatus C2 updates the delivery list corresponding to the determined delivery vehicle, and transmits the delivery list to a deliverer terminal C3 (see 1805).

Next, the deliverer terminals C3 receives and outputs the updated delivery list. As a result, the deliverer terminal C3 switches from the old delivery list to the new delivery list, and outputs the new delivery list (see 1806).

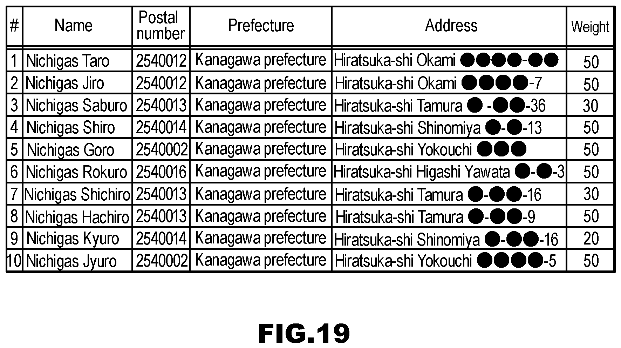

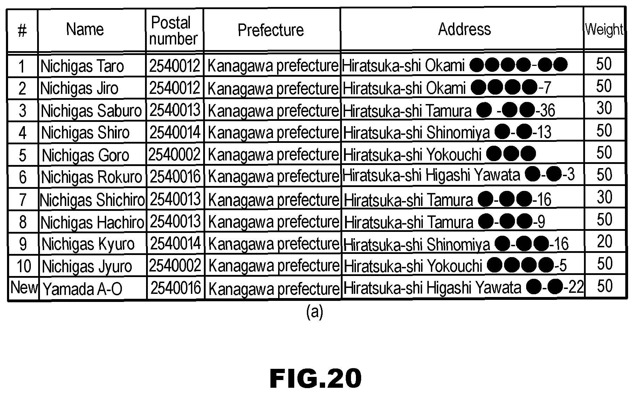

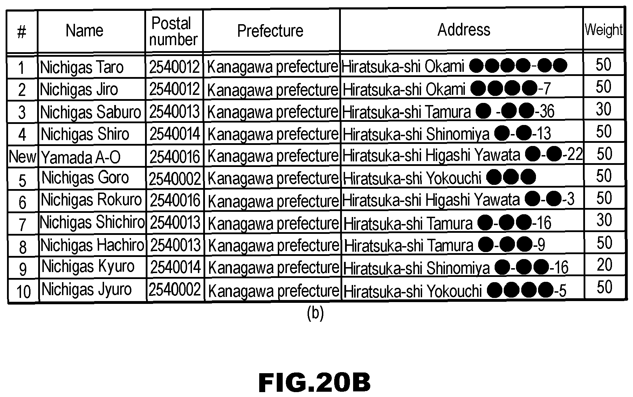

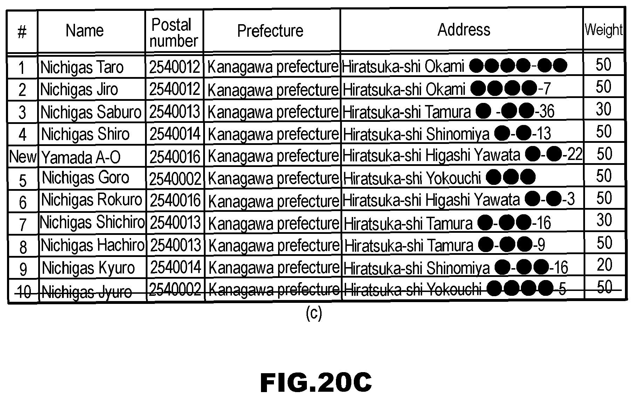

Note that an example of the old delivery list is shown in FIG. 19. In FIG. 19, the customer information included in the delivery list contains a name, location information (zip code, prefecture, address), and cylinder type information (weight in this example). An example of the new delivery list updated by the delivery list update unit C233 is shown in FIG. 20. FIG. 20A is a new delivery list formed by adding customer information regarding an additional delivery destination to the end of the old delivery list. FIG. 20B is a new delivery list formed by inserting customer information regarding an additional delivery destination in the middle of the old delivery list without deleting customer information regarding another delivery destination. FIG. 20C is a new delivery list formed by inserting customer information regarding an additional delivery destination in the middle of the old delivery list and deleting customer information regarding another delivery destination (the last delivery destination in this example). Although many people in FIGS. 19 and 20 have the same family name, they typically are from different households.

As described above, according to the present embodiment, it is possible to efficiently deliver gas cylinders to a customer in the case of gas shortage or the like.

Also, according to the present embodiment, the updated delivery list can be sent to the delivery vehicles.

Also, according to the present embodiment, by flexibly updating the delivery list, it is possible to respond to a request from an urgent customer, who has run out of gas, for example, and to control the delivery of cylinders according to the needs or abilities of the deliverers. That is to say, for example, it is possible to request that deliverers who wish to perform delivery to increase their salary even by working overtime perform urgent delivery, and if there are no deliverers who wish to perform delivery to increase salary even by working overtime perform urgent delivery, it is possible delay delivery to non-urgent customers to the next day, and delivery cylinders to an urgent customer, who has run out of gas, for example.

Note that the processing in the present embodiment may be realized using software. This software may be distributed through software downloading or the like. Also, this software may be recorded on a recording medium such as a CD-ROM and distributed. Note that the same applies to the other embodiments in the present description. The software that realizes the information processing apparatus C2 in the present embodiment is the program described below. That is to say, this program is a program that enables a computer that can access: a customer information storage unit that stores one or more pieces of customer information each containing a customer identifier and customer position information that specifies a position of a customer identified by the customer identifier; a delivery cylinder information storage unit that stores, in association with a delivery vehicle identifier that identifies a delivery vehicle, one or more pieces of delivery cylinder information each being information regarding a delivery-target cylinder that is to be delivered by the delivery vehicle; and a delivery vehicle position information storage unit that stores, in association with a delivery vehicle identifier, a delivery vehicle position information that specifies a delivery vehicle, to function as: a customer identifier acceptance unit that accepts a customer identifier that identifies a customer whose remaining amount of gas is small enough to satisfy a predetermined condition; a customer information position information acquisition unit that acquires customer position information that is paired with a customer identifier accepted by the customer identifier acceptance unit, from the customer information storage unit; a delivery vehicle determination unit that determines a delivery vehicle that is to deliver a cylinder, using the customer position information acquired by the customer information position information acquisition unit, and a set of pieces of information composed of delivery vehicle position information and delivery cylinder information paired with the same delivery vehicle identifier; and a customer information transmission unit that transmits customer information that is paired with the customer identifier, to a deliverer terminal of the delivery vehicle determined by the delivery vehicle determination unit.

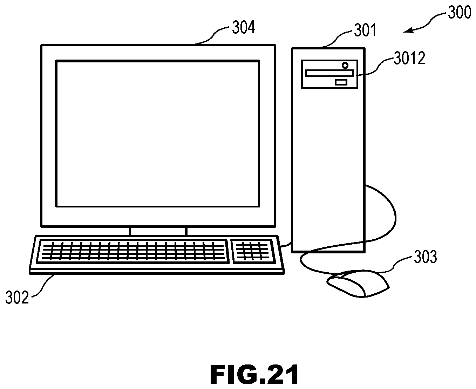

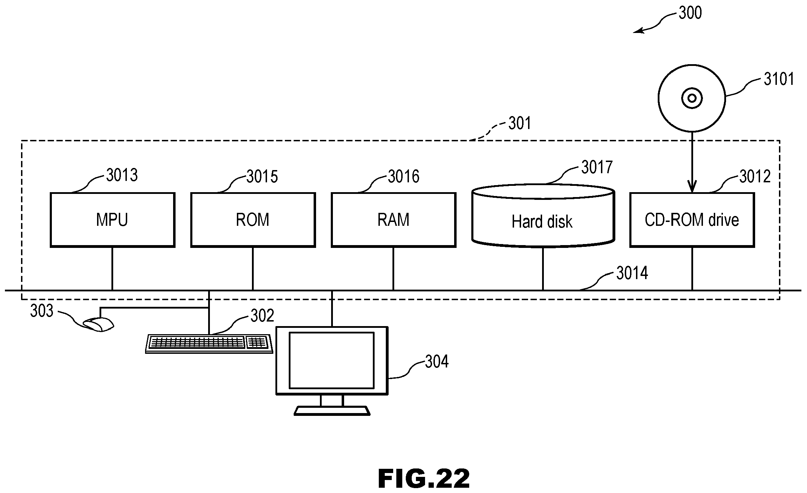

FIG. 21 shows an external appearance of a computer that realizes the information processing apparatus C2 and so on according to the various embodiments described above by executing the programs described in the present description. The above-described embodiments can be realized using computer hardware and a computer program that is executed thereon. FIG. 21 is an overview diagram for this computer system 300, and FIG. 22 is a block diagram for the system 300.

In FIG. 21, the computer system 300 includes a computer 301 that includes a CD-ROM drive, a keyboard 302, a mouse 303, and a monitor 304.

In FIG. 22, the computer 301 includes, in addition to a CD-ROM drive 3012, an MPU 3013, a bus 3014 that is connected to the CD-ROM drive 3012 and so on, a ROM 3015 for storing programs such as a bootup program, a RAM 3016 that is connected to the MPU 3013 to temporarily store an instruction from an application program, and provide a temporary memory space, and a hard disk 3017 for storing an application program, a system program, and data. Although not illustrated here, the computer 301 may further include a network card that provides connection to a LAN.

The program that causes the computer system 300 to execute the functions of the information processing apparatus C2 and so on according to the above-described embodiments may be stored in a CD-ROM 3101, inserted into the CD-ROM drive 3012, and further transferred to the hard disk 3017. Instead, the program may be transmitted to the computer 301 via a network (not shown), and stored in the hard disk 3017. The program is loaded to the RAM 3016 when it is to be executed. The program may be loaded directly from the CD-ROM 3101 or a network.

The program does not necessarily include an operating system (OS) that causes the computer 301 to execute functions such as the information processing apparatus C2 according to the above-described embodiments, a third-party program, or the like. The program need only include an instruction part that calls an appropriate function (module) in a controlled manner to obtain the desired result. It is well known how the computer system 300 works, and therefore detailed description thereof will be omitted.

A single computer or a plurality of computers may execute the above-described program. That is to say, centralized processing or distributed processing may be performed.

Also, as a matter of course, in each of the above-described embodiments, the two or more communication means that exist in one apparatus may be physically realized using one medium.

Furthermore, in each of the above-described embodiments, each kind of processing may be realized through centralized processing that is performed by a single apparatus, or may be realized through distributed processing that is performed by a plurality of apparatuses.

The present invention is not limited to the above-described embodiments, and various modifications can be made. Such modifications are also included in the scope of the present invention as a matter of course.

### Industrial Applicability

As described above, the information processing apparatus according to the present invention achieves the effect of efficiently delivering gas cylinders to customers in the case of gas shortage or the like, and is useful as an information processing apparatus or the like.

## Claims

1. An information processing apparatus comprising:
a customer information storage unit that stores one or more pieces of customer information that contain a customer identifier and customer position information that specifies a position of a customer that is identified by the customer identifier;
a delivery cylinder information storage unit that stores, in association with a delivery vehicle identifier that identifies a delivery vehicle, one or more pieces of delivery cylinder information each being information regarding a delivery-target cylinder that is to be delivered by the delivery vehicle;
a delivery vehicle position information storage unit that stores, in association with a delivery vehicle identifier, delivery vehicle position information that specifies a position of the delivery vehicle;
a customer identifier acceptance unit that accepts a customer identifier that identifies a customer whose remaining amount of gas is small enough to satisfy a predetermined condition;
a customer information position information acquisition unit that acquires customer position information that is paired with the customer identifier accepted by the customer identifier acceptance unit, from the customer information storage unit;
a delivery vehicle determination unit that determines a delivery vehicle that is to deliver a cylinder, using the customer position information acquired by the customer information position information acquisition unit, and a set of pieces of information composed of delivery vehicle position information and delivery cylinder information that is paired with the same delivery vehicle identifier; and
a customer information transmission unit that transmits customer information that is paired with the customer identifier, to a delivery vehicle terminal of the delivery vehicle determined by the delivery vehicle determination unit.

2. The information processing apparatus according to claim 1,
wherein the delivery cylinder information contains cylinder type information that specifies a type of a cylinder,
the customer information contains cylinder type information that specifies a type of a cylinder that is used by a customer, and
the delivery vehicle determination unit determines a delivery vehicle that is to deliver a cylinder using cylinder number information that specifies the number of cylinders that is to be acquired using the delivery cylinder information paired with the delivery vehicle identifier, cylinder type information, the cylinder type information contained in the customer information, the customer position information, and the delivery vehicle position information paired with the delivery vehicle identifier.

3. The information processing apparatus according to claim 2,
wherein the delivery vehicle determination unit determines a delivery vehicle for which cylinder number information and cylinder type information acquired using the delivery cylinder information paired with the delivery vehicle identifier satisfy a cylinder condition that is a condition regarding cylinder number information and cylinder type information contained in the customer information, and that corresponds to delivery vehicle position information that satisfies a position condition regarding a distance between a position that is specified by the customer position information and a position that is specified by the delivery vehicle position information.

4. The information processing apparatus according to claim 3,
wherein the delivery vehicle determination unit determines a delivery vehicle that satisfies the cylinder condition and corresponds to delivery vehicle position information that satisfies a position condition that the distance between the position specified by the customer position information and the position specified by the delivery vehicle position information is the shortest.

5. The information processing apparatus according to any one of claims 1 to 4, further comprising:
a delivery list storage unit that stores a delivery list that is two or more pieces of delivery destination information regarding a delivery destination of a gas cylinder, in association with the delivery vehicle identifier; and
a delivery list update unit that acquires a delivery list that corresponds to the delivery vehicle determined by the delivery vehicle determination unit, and acquires an updated delivery list by adding at least part of the customer information paired with the customer identifier, to the delivery list, and
the customer information transmission unit transmits the delivery list updated by the delivery list update unit, to a delivery vehicle terminal of the delivery vehicle determined by the delivery vehicle determination unit.

6. The information processing apparatus according to any one of claims 1 to 5, further comprising:
a delivery cylinder information reception unit that receives delivery cylinder information in association with a delivery vehicle identifier;
a delivery cylinder information accumulation unit that accumulates the delivery cylinder information received by the delivery cylinder information reception unit, in the delivery cylinder information storage unit, in association with the delivery vehicle identifier;
a delivery vehicle position information reception unit that receives delivery vehicle position information from a delivery vehicle terminal that is a terminal of a cylinder delivery vehicle, in association with a delivery vehicle identifier that identifies the delivery vehicle; and
a delivery vehicle position information accumulation unit that accumulates the delivery vehicle position information received by the delivery vehicle position information reception unit, in the delivery vehicle position information storage unit, in association with the delivery vehicle identifier.

7. An information processing method that is realized using:
a customer information storage unit that stores one or more pieces of customer information that contain a customer identifier and customer position information that specifies a position of a customer that is identified by the customer identifier;
a delivery cylinder information storage unit that stores, in association with a delivery vehicle identifier that identifies a delivery vehicle, one or more pieces of delivery cylinder information each being information regarding a delivery-target cylinder that is to be delivered by the delivery vehicle;
a delivery vehicle position information storage unit that stores, in association with a delivery vehicle identifier, delivery vehicle position information that specifies a position of the delivery vehicle;
a customer identifier acceptance unit; a customer information position information acquisition unit; a delivery vehicle determination unit; and a customer information transmission unit, the information processing method comprising:
a customer identifier acceptance step in which the customer identifier acceptance unit accepts a customer identifier that identifies a customer whose remaining amount of gas is small enough to satisfy a predetermined condition;
a customer information position information acquisition step in which the customer information position information acquisition unit acquires customer position information that is paired with the customer identifier accepted in the customer identifier acceptance step, from the customer information storage unit;
a delivery vehicle determination step in which the delivery vehicle determination unit determines a delivery vehicle that is to deliver a cylinder, using the customer position information acquired in the customer information position information acquisition step, and a set of pieces of information composed of delivery vehicle position information and delivery cylinder information that is paired with the same delivery vehicle identifier; and
a customer information transmission step in which the customer information transmission unit transmits customer information that is paired with the customer identifier, to a delivery vehicle terminal of the delivery vehicle determined in the delivery vehicle determination step.

8. A program for enabling a computer that can access:
a customer information storage unit that stores one or more pieces of customer information that contain a customer identifier and customer position information that specifies a position of a customer that is identified by the customer identifier;
a delivery cylinder information storage unit that stores, in association with a delivery vehicle identifier that identifies a delivery vehicle, one or more pieces of delivery cylinder information each being information regarding a delivery-target cylinder that is to be delivered by the delivery vehicle; and
a delivery vehicle position information storage unit that stores, in association with a delivery vehicle identifier, a delivery vehicle position information that specifies a position of a delivery vehicle, to function as:
a customer identifier acceptance unit that accepts a customer identifier that identifies a customer whose remaining amount of gas is small enough to satisfy a predetermined condition;
a customer information position information acquisition unit that acquires customer position information that is paired with the customer identifier accepted by the customer identifier acceptance unit, from the customer information storage unit;
a delivery vehicle determination unit that determines a delivery vehicle that is to deliver a cylinder, using the customer position information acquired by the customer information position information acquisition unit, and a set of pieces of information composed of delivery vehicle position information and delivery cylinder information that is paired with the same delivery vehicle identifier; and
a customer information transmission unit that transmits customer information that is paired with the customer identifier, to a delivery vehicle terminal of the delivery vehicle determined by the delivery vehicle determination unit.
